# EUROPÄISCHE PATENTSCHRIFT

(11) **EP 1 573 303 B1**
(45) Veröffentlichungstag und Bekanntmachung des Hinweises auf die Patenterteilung: **10.06.2009**
(21) Anmeldenummer: 03813134.8
(22) Anmeldetag: 17.12.2003
(51) Int. Cl.: G01N 21/64, G01N 21/55, G02B 21/06

(54) **FLUORESZENZBASIERTE OPTISCHE OBJEKTUNTERSUCHUNGSEINRICHTUNG, INSBESONDERE FÜR DIE TIRF-MIKROSKOPIE**
OPTICAL FLUORESCENCE-BASED DEVICE FOR ANALYSING OBJECTS, IN PARTICULAR FOR TIRF MICROSCOPY
DISPOSITIF OPTIQUE POUR EXAMINER DES OBJETS AU MOYEN DE LA FLUORESCENCE NOTAMMENT EN MICROSCOPIE TIRF

(30) Priorität: 17.12.2002 DE 10258945
(43) Veröffentlichungstag der Anmeldung: 14.09.2005
(73) Patentinhaber: Olympus Soft Imaging Solutions GmbH, 48149 Münster (DE)
(72) Erfinder: SEEL, Matthias, 80339 München (DE)
(74) Vertreter: Jordan, Volker Otto Wilhelm
(86) Internationale Anmeldenummer: PCT/EP2003/014405
(87) Internationale Veröffentlichungsnummer: WO 2004/055500

(56) Entgegenhaltungen:
- US-A1- 2002 097 489
- US-A1- 2003 086 163
- SAITO K ET AL: "Dual-colour microscopy of single fluorophores bound to myosin interacting with fluorescently labelled actin using anti-Stokes fluorescence" JOURNAL OF MICROSCOPY, Bd. 188, Nr. 3, Dezember 1997 (1997-12), Seiten 255-263, XP002276875 in der Anmeldung erwähnt

## Beschreibung

Die Erfindung betrifft allgemein eine fluoreszenzbasierte optische Objektuntersuchungseinrichtung, umfassend einen Objektbereich, in dem wenigstens ein zu untersuchendes Objekt auf einem Objektträger plazierbar ist; einen Beobachtungsstrahlengang, der vom Objektbereich zu einem Bildbereich oder Beobachtungsbereich führt; und wenigstens einen Anregungsstrahlengang, der von einer Lichtquelle oder einem Lichtausgang zum Objektbereich führt und über den Anregungslicht derart dem Objektträger zuführbar ist, dass das Anregungslicht auf eine Grenzfläche des Objektträgers unter einem Einfallswinkel zum Einfallslot zur Grenzfläche des Objektträgers trifft, der größer oder gleich dem zum Einfallslot gemessenen Grenzwinkel der Totalreflektion ist, um eine Fluoreszenzanregung im Wege von evaneszenten elektromagnetischen Feldern vorzusehen.

Derartige Objektuntersuchungseinrichtungen sind beispielsweise zur Untersuchung von biologischen Objekten weit gebräuchlich, insbesondere in der Fluoreszenzmikroskopie, speziell der so genannten Evaneszent-Feld-Mikroskopie (Evanescent Field Mikroscopy) bzw. Totale-Interne-Reflektion-Fluoreszenz-Mikroskopie (Total Internal Reflection Fluorescence Microscopy, TIRFM). Bei dieser Mikroskopie auf Grundlage von im Wege von evaneszenten elektromagnetischen Feldern erfolgender Fluoreszenzanregung handelt es sich um eine Sonderform der Fluoreszenzmikroskopie, bei der die Tatsache genutzt wird, dass bei Totalreflektion eines Strahls an einer Grenzfläche von optisch dichterem zu optisch dünnerem Medium in unmittelbarer Nähe dieser Grenzfläche Lichtintensität auch im optisch dünneren Medium vorliegt. Diese fällt allerdings, je nach Wellenlänge, über ca. 200 bis 300 nm exponentiell ab. Damit ist es möglich, Fluorophore, die im optisch dünneren Medium (z. B. Wasser) vorliegen, beispielsweise homogen oder inhomogen verteilt sind, selektiv in einer dünnen, an die Grenzfläche angrenzenden Anregungsschicht anzuregen, wodurch diffuse Hintergrundfluoreszenz von Fluorophoren außerhalb der dünnen Anregungsschicht praktisch vollständig unterdrückt wird.

Durch die Begrenzung der Fluoreszenzanregung auf eine dünne Anregungsschicht angrenzend zur Grenzfläche bietet die Evaneszent-Feld-Mikroskopie bzw. TIRF-Mikroskopie auch die Möglichkeit, einzelne Fluorophore zu erkennen, d. h. beispielsweise Objekte, insbesondere Moleküle, die nur etwa mit einem einzigen Fluorophormolekül markiert sind, zu detektieren und zu verfolgen. Man kann beispielsweise daran denken, an einzelnen Myosinmolekülen die Verbindung und Abdissoziation von ATP-Molekülen direkt zu verfolgen und mit Kräften und Bewegungen zu korrelieren, die im Verlauf der Hydrolyse von ATP durch das Myosinmolekül bei seiner Wechselwirkung mit Aktin erzeugt werden. Entsprechende Forschungen wurden bzw. werden in der Molekular- und Zellphysiologie durchgeführt. Die Anwendung der TIRF-Mikroskopie ist aber selbstverständlich nicht auf derartige, hier nur als rein exemplarisches, keinesfalls beschränkend aufzufassendes Beispiel angesprochene Fragestellungen beschränkt. Die TIRF-Mikroskopie kann vielmehr im Zusammenhang mit vielerlei Fragestellungen in der biologischen, insbesondere molekularbiologischen Forschung und auch in völlig anderem, auch nicht-biologischem Zusammenhang, vorteilhaft angewendet werden. Die TIRFM-Methode ist in der wissenschaftlichen Literatur ausführlich beschrieben, es wird beispielsweise auf den Aufsatz "Dual-colour microscopy of single fluorophores bound to myosin interacting with fluorescently labelled actin using anti-Stokes fluorescence" von K. Saito, M. Tokunaga, A. H. Iwane und T. Yanagida, Journal of Microscopy, Vol 188, Pt 3, Dezember 1997, Seiten 255-263, verwiesen. Ein zwischen einem Anregungsstrahlengang und einem Beleuchtungsstrahlengang umschaltbares TIRF-Mikroskop is aus US 2002/0097489 A1 bekannt.

Die Erfindung betrifft speziell eine fluoreszenzbasierte Objektuntersuchungseinrichtung, umfassend: einen Objektbereich, in dem wenigstens ein zu untersuchendes Objekt auf einem Objektträger plazierbar ist; einen Beobachtungsstrahlengang, der vom Objektbereich zu einem Bildbereich oder Beobachtungsbereich führt; und mehrere Anregungsstrahlengänge, die jeweils von einer Lichtquelle oder einem Lichtausgang zum Objektbereich führen und über die jeweils Anregungslicht derart dem Objektträger zuführbar ist, dass das Anregungslicht auf eine Grenzfläche des Objektträgers unter einem Einfallswinkel zum Einfallslot zur Grenzfläche des Objektträgers trifft, der größer oder gleich dem zum Einfallslot gemessenen Grenzwinkel der Totalreflektion ist, um eine Fluoreszenzanregung im Wege von evaneszenten elektromagnetischen Feldern vorzusehen.

Für manche TIRF-Anwendungen werden mehrere verschiedene Fluoreszenzanregungswellenlängen benötigt, die oftmals einen größere Wellenlängenabstand aufweisen (z. B. die Wellenlängen 405 nm, 488 nm und 638 nm). In der Regel ist es zweckmäßig, dass Anregungslicht über eine Lichtleitfaser oder dergleichen von einer entsprechenden Lichtquelle, insbesondere Laserlichtquelle, zumAnregungsstrahlengang hinzuführen und das aus der Lichtleitfaser oder dergleichen austretende Licht dann über den Anregungsstrahlengang in der erläuterten Weise dem Objektträger zuzuführen. Im Falle der mehrere Anregungswellenlängen benötigenden "Vielfarben-TIRF" wird herkömmlich eine gemeinsame Lichtleitfaser oder dergleichen verwendet, die aber nur eine der Wellenlängen oder einen eingeschränkten, relativ kleinen Wellenlängenbereich optimal, d. h. mit hoher Effizienz bzw. geringen Intensitätsverlusten zum Anregungsstrahlengang transportieren kann. Dies gilt insbesondere dann, wenn so genannte Monomodefasern verwendet werden, welche entsprechend ihrer inhärenten physikalischen Eigenschaften nur auf eine Wellenlänge bzw. einen begrenzten Wellenlängenbereich optimal angepasst sein können. Im Hinblick auf eine definierte Einkopplung des Anregungslichts in den Anregungsstrahlengang, speziell die Gewährleistung von Einfallswinkeln zum Einfallslot zur Grenzfläche des Objektträgers größer oder gleich dem Grenzwinkel der Totalreflektion, wird man in der Regel nicht auf die Verwendung von Monomodefasern verzichten wollen, so dass die anderen Wellenlängen, die außerhalb des Auslegungswellenbereichs der Faser liegen, nur noch mit einem deutlichen Intensitätsverlust von der Faser geführt werden. Gegebenenfalls kommt es auch zum Auftreten von Multimoden für die anderen Wellenlängen, was - wie angesprochen - unter Umständen für die Gewährleistung der richtigen Einfallswinkel nachteilig ist.

Solange es nur um Intensitätsverluste geht, lassen sich diese in der Regel durch Bereitstellung entsprechend intensitätsstarker Lichtquellen ausgleichen. Die Verwendung intensitätsstärkerer Lichtquellen, insbesondere intensitätsstärkerer Laserlichtquellen, führt aber zu höheren apparativen Kosten. So lassen sich beispielsweise die Laserlichtstrahlen mehrerer Laserlichtquellen, welche jeweils nur eine einzige Wellenlänge emittieren (so genannte Single-Line-Laser) mittels eines so genannten Laserstrahlkombinierers zu einem einzigen Laserstrahl vereinigen und damit einer Lichtleitfaser oder dergleichen zur Einkopplung führen. Das vorstehend angesprochene chromatische Verhalten der Faser führt auch in diesem Fall zu den nachteiligen wellenlängenabhängigen Intensitätsverlusten und ggf. zu Multimoden, und nur die Intensitätsverluste lassen sich im Prinzip mit einem entsprechenden apparativen Aufwand und damit Kostenaufwand kompensieren, wobei dann, wenn starke Laserlinien oder/und geringe Intensitätsverluste in der Faser erleidende Laserlinien, etwa durch optische Abschwächer zur Angleichung an die Intensität anderer Laserlinien abgeschwächt werden, das Intensitätspotential der betreffenden Laserlichtquelle im Zusammenhang mit der Vielfarben-TIRF nicht nutzbar ist und insoweit der Kostenaufwand besonders nachteilig erscheint.

Aus Kostengründen werden überdies häufig Vielfarben-Lichtquellen, insbesondere Vielfarben-Laser verwendet, die mehrere oder alle benötigte Anregungswellenlängen im Prinzip bereitstellen, aber manche der emittierten und benötigten Wellenlängen, ggf. Laserlinien, nicht so leistungsstark wie andere. Hinzu kommen die schon angesprochenen wellenlängenabhängigen Intensitätsverluste. Damit stehen für die TIRF-Methode die benötigten Anregungswellenlängen im Normalfall nicht gleich intensiv für die Zufuhr zum Objektbereich bzw. in/an der Probe zur Verfügung.

Demgegenüber liegt der Erfindung die Aufgabe zugrunde, eine verbesserte "Vielfarben-TIRF-Anregung" vorzusehen, die mehr Freiheiten bei der Zufuhr des Anregungslichts verschiedener Anregungswellenlängen gibt und die Möglichkeit schafft, dass im Falle des Einsatzes einer Lichtleitfaseranordnung oder dergleichen zur Zufuhr des Anregungslichts zum Anregungsstrahlengang die vorstehend erläuterten Probleme vermieden werden können.

Zur Lösung dieser Aufgabe wird erfindungsgemäß vorgeschlagen, dass die Anregungsstrahlengänge jeweils einen eigenen, nicht an ein lichtführendes Medium gebundenen und gegenüber wenigstens einem anderen Anregungsstrahlengang gesonderten Freistrahlungs-Strahlengangabschnitt aufweisen.

Erfindungsgemäß haben die Anregungsstrahlengänge zumindest eingangsseitig (am vom Objektbereich fernliegenden Ende) einen eigenen, nicht an ein lichtführendes Medium gebundenen und gegenüber wenigstens einem anderen Anregungsstrahlengang gesonderten Freistrahlungs-Strahlengangabschnitt, der sich beispielsweise an das Ausgangsende einer jeweiligen Lichtleitfaser (ein Beispiel eines hier angesprochenen "Lichtausgangs") anschließt, die dementsprechend nur eine Anregungswellenlänge oder mehrere, in einem engen Wellenlängenbereich liegende Anregungswellenlängen führen braucht und dementsprechend optimal für diese Anregungswellenlänge bzw. diese Anregungswellenlängen angepasst sein kann zur Gewährleistung geringer Intensitätsverluste und zur Vermeidung von Multimoden. Soweit Anregungswellenlängen benötigt werden, die einen größeren Wellenlängenabstand aufweisen und dementsprechend mittels einer Monomodefaser nicht mehr gemeinsam in der gewünschten Weise geführt werden können, kann das Anregungslicht dieser Anregungswellenlängen mittels jeweils einer eigenen, für die betreffende Anregungswellenlänge optimal angepassten Lichtleitfaser oder dergleichen zu einem zugeordneten Freistrahlungs-Strahlengangabschnitt eines jeweiligen Anregungsstrahlengangs zugeführt werden, so dass die oben angesprochenen Probleme der Vielfarben-TIRF-Methode nicht mehr auftreten. Es sei angemerkt, dass es nicht zwingend ist, dass das Anregungslicht mittels eines jeweiligen Lichtleiters oder dergleichen zugeführt wird. Soweit beispielsweise Halbleiterlaser oder sonstige kleine Lichtquellen hinsichtlich Wellenlänge und benötigter Anregungslichtintensität im Prinzip einsetzbar sind, kommt es durchaus in Betracht, den Freistrahlungs-Strahlengangabschnitt von der betreffenden Lichtquelle ausgehen zu lassen.

Es kann vorteilhaft vorgesehen sein, dass wenigstens einem der Anregungsstrahlengänge ein Abführstrahlengang zugeordnet ist, der vom Objektbereich zu einer Lichtfallenanordnung führt und sich derart im Objektbereich an den Anregungsstrahlengang anschließt, dass durch Totalreflektion an der Grenzfläche reflektiertes Anregungslicht in den Abführstrahlengang eintritt und der Lichtfallenanordnung zugeführt wird. Es wird in diesem Zusammenhang weiterbildend vorgeschlagen, dass allen Anregungsstrahlengängen ein gemeinsamer oder jeweils ein eigener Abführstrahlengang samt zugehöriger Lichtfallenanordnung zugeordnet ist.

Da das Ziel der TIRF-Methode es gerade ist, störende Hintergrundfluoreszenz im Wege der TIRF-Anregung zu vermeiden, ist es von großer Wichtigkeit, dass das über den Anregungsstrahlengang zum Objektträger zugeführte Anregungslicht vollständig unter einem Einfallswinkel zum Einfallslot auf die Grenzfläche des Objektträgers treffen zu lassen, der größer oder gleich dem zum Einfallslot gemessenen Grenzwinkel der Totalreflektion ist, so dass nur evaneszente elektromagnetische Felder in das optisch dünnere Medium eintreten. Bei der Auslegung einer entsprechenden Objektuntersuchungseinrichtung, ggf. einem entsprechenden Mikroskop mit TIRF-Einkopplung, wurde deswegen herkömmlich eine große Sorgfalt darauf verwandt, das Anregungslicht auf definierte, Fehl-Einfallswinkel kleiner dem Grenzwinkel vermeidende Weise auf die Grenzfläche des Objektträgers treffen zu lassen. Trotzem wird in der Praxis noch eine gewisse störende Hintergrundfluoreszenz in Folge von "normal", also nicht als evaneszente elektromagnetische Felder in das optisch dünnere Medium eintretender Anregungsstrahlung beobachtet.

Durch Vorsehen wenigstens eines definierten, in einer Lichtfallenanordnung endenden Abführstrahlengangs wird dem Auftreten von Streulicht in Folge des durch Totalreflektion zurückreflektierten Anregungslichts wirkungsvoll entgegengewirkt. Herkömmlich fällt das durch Totalreflektion an der Grenzfläche symmetrisch zurückreflektierte Anregungslicht undefiniert auf irgendwelche Konstruktionselemente der Objektuntersuchungseinrichtung, ggf. des Mikroskops, wodurch Streulicht entsteht, das einerseits unter einem Einfallswinkel zum Einfallslot auf die Grenzfläche des Objektträgers treffen kann, der kleiner als der Grenzwinkel der Totalreflektion ist, so dass das Streulicht in das optisch dünnere Medium eintritt und weit jenseits der dünnen Anregungsschicht Fluoreszenzmoleküle anregen kann (mit der Folge von Fehlsignalen), und das andererseits auf den zur Erfassung der Fluoreszenzstrahlung dienenden Signaldetektor, ggf. Detektorfeld für ortsaufgelöste Fluoreszenzerfassung, fallen kann und so zu einer Rauscherhöhung führt, wodurch die Erfassung schwacher Fluoreszenzstrahlung in Folge der evaneszenten elektromagnetischen Felder erschwert und ggf. sogar verhindert wird, insbesondere im Zusammenhang mit der Detektion von einzelnen Fluoreszenzmolekülen.

Die Objektuntersuchungseinrichtung kann wenigstens einen Beleuchtungsstrahlengang, insbesondere wenigstens einen Auflicht-Beleuchtungsstrahlengang aufweisen, über den der Objektbereich ohne wesentliche Totalreflektion am Objektträger mit Beleuchtungslicht beleuchtbar ist und der zumindest abschnittsweise, jedenfalls in einem im Objektbereich endenden Abschnitt, durch den Beobachtungsstrahlengang verläuft oder mit diesem zusammenfällt. Es kann ferner eine dem Beobachtungsstrahlengang und - wenn vorgesehen - ggf. dem Beleuchtungsstrahlengang zugehörige, aus dem Objektbereich abbildende Optik, insbesondere ein Mikroskopobjektiv vorgesehen sein, durch die - wenn vorgesehen - der Beleuchtungsstrahlengang ggf. führt und über die von dem Objektbereich ausgehendes Beobachtungslicht, insbesondere auf einer Fluoreszenzanregung beruhendes Fluoreszenzlicht oder/und auf einer Beleuchtung des Objektbereichs über wenigstens einen Beleuchtungsstrahlengang beruhendes sonstiges Licht, in den Bildbereich oder Beobachtungsbereich abbildbar ist. Dabei kann wenigstens einer der Anregungsstrahlengänge durch die Optik verlaufen. Vorzugsweise verlaufen alle Anregungsstrahlengänge durch die Optik. Es wird speziell vorgeschlagen, dass wenigstens eine dem Beleuchtungsstrahlengang und einem der Anregungsstrahlengänge, vorzugsweise allen Anregungsstrahlengängen, gemeinsam zugehörige Linsenanordnung vorgesehen ist, über die sowohl Beleuchtungslicht in die Optik zur Beleuchtung des Objektbereichs einkoppelbar ist als auch Anregungslicht in die Optik zur Zufuhr zum Objektträger für die Fluoreszenzanregung einkoppelbar ist. Große Vorteile ergeben sich dann, wenn die Linsenanordnung, eventuell in Kombination mit einer zugeordneten optischen Anordnung, derart betrieben wird oder betreibbar ist, dass einerseits das Beleuchtungslicht azentrisch durch die Linsenanordnung tritt und andererseits das Anregungslicht zentrisch durch die Linsenanordnung tritt.

Bei einer bekannten Anordnung geschieht die Einkopplung des Anregungslichts, insbesondereAnregungs-Laserlichts, übereine konjugierte Pupillenebene, wobei eine Kondensatoroptik bezogen auf die TRIF-Lichtquelle exzentrisch betrieben wird, was zu Abbildungsfehlern führt. Ein weiterer Nachteil ist, dass die im Wege einer Einspiegelung in einen durch die Optik definierten Strahlengang erfolgende Einkopplung in Folge der Einbringung eines Umlenkelements, nämlich eines Prismas oder Spiegels, zur Vignettierung des durch die Optik definierten Strahlengangs führt, der zur Zufuhr einer das ganze Bildfeld ausleuchtenden konventionellen Beleuchtung (für eine Abbildung aus dem Objektbereich in den Bildbereich oder Beobachtungsbereich unmittelbar auf Grundlage des dann als Beobachtungslicht dienenden Beleuchtungslichts oder für eine Fluoreszenzanregung über das ganze Bildfeld und auch in einem die TIRF-Anregungsschicht deutlich übersteigenden Tiefenbereich des Objektbereichs) genutzt wird. Generell besteht das im Hinblick auf die Vermeidung von Hintergrundfluoreszenz schwerwiegende Problem, dass dann, wenn die angesprochene Linsenanordnung für die Zufuhr der TIRF-Anregungsstrahlung relativ weit außerhalb des Mittelbereichs der jeweiligen Linse genutzt wird, Abbildungsfehler wie etwa Astigmatismus und Koma auftreten, die zum Auftreten von Fehl-Einfallswinkeln an der Grenzschicht des Objektträgers führen, die kleiner als der Grenzwinkel der Totalreflektion sind, so dass Anregungsstrahlung als "normale" Strahlung, also nicht als evaneszente elektromagnetische Felder, in das optisch dünnere Medium eintritt und jenseits der an die Grenzschicht angrenzenden dünnen Anregungsschicht zu Fluoreszenzanregungen führt. Die Folge ist das Auftreten von Hintergrundfluoreszenzstrahlung, die - wie angesprochen - insbesondere beim Einzelmolekülnachweis überaus schädlich ist.

Nach dem Weiterbildungsvorschlag wird die Linsenanordnung für das Anregungslicht zentrisch genutzt, unter Inkaufnahme einer azentrischen Nutzung der Linsenanordnung für das Beleuchungslicht der "konventionellen" Beleuchtung. Die azentrische Nutzung der Linsenanordnung für das Beleuchtungslicht ist nämlich bei weitem nicht so kritisch wie für das TIRF-Anregungslicht, da es für die "konventionelle" Beleuchtung keine "falschen" Einfallwinkel gibt, die Probleme hinsichtlich von Hintergrundstrahlung oder dergleichen aufwerfen könnten. Das Beleuchtungslicht soll ja ohnehin über das Gesichtsfeld und über die Tiefe des Objektbereichs zugeführt werden. Eine azentrische Nutzung der Linsenanordnung für das in Folge der Totalreflektion an der Grenzfläche rückreflektierte Anregungslicht ist ebenfalls unkritisch, da dieses Anregungslicht für Abbildungszwecke nicht genutzt wird und vorzugsweise definiert einer Lichtfallenanordnung zugeführt wird.

In der Regel wird jede erfindungsgemäße Objektuntersuchungseinrichtung wenigstens einen Beleuchtungsstrahlengang aufweisen, über den der Objektbereich ohne wesentliche Totalreflektion am Objektträger mit Beleuchtungslicht beleuchtbar ist, etwa zur Fluoreszenzanregung über das gesamte Gesichtsfeld bzw. in der Tiefe des Objektbereichs oder für herkömmliche Abbildungsmikroskopien auf Grundlage von aus dem Objektbereich in den Bildbereich oder Beobachtungsbereich abgebildetem Beleuchtungslicht als Beobachtungslicht. Es wird insbesondere zweckmäßig sein, wenigstens einen Beleuchtungsstrahlengang vorzusehen, der als Auflicht-Beleuchtungsstrahlengang ausgebildet ist. Für viele Anwendungen ist es aber auch zweckmäßig, zusätzlich oder alternativ einen Beleuchtungsstrahlengang vorzusehen, der als Durchlicht-Beleuchtungsstrahlengang ausgebildet ist.

Es wird speziell vorgeschlagen, dass wenigstens ein Beleuchtungsstrahlengang, insbesondere wenigstens ein Auflicht-Beleuchtungsstrahlengang, zumindest abschnittsweise, jedenfalls in einem im Objektbereich endenden Abschnitt, durch den Beobachtungsstrahlengang verläuft oder mit diesem zusammenfällt. Bei jeder erfindungsgemäßen Objektuntersuchungseinrichtung kann es sehr zweckmäßig sein, wenn eine dem Beobachtungsstrahlengang zugehörige, aus dem Objektbereich abbildende Optik, insbesondere ein Mikroskopobjektiv, vorgesehen ist, über die von dem Objektbereich ausgehendes Beobachtungslicht, insbesondere auf einer Fluoreszenzanregung beruhendes Fluoreszenzlicht oder/und auf einer Beleuchtung des Objektbereichs über wenigstens einen Beleuchtungsstrahlengang beruhendes sonstiges Licht, in den Bildbereich oder Beobachtungsbereich abbildbar ist. Dabei kann der Beleuchtungsstrahlengang (insbesondere Auflicht-Beleuchtungsstrahlengang) durch die Optik führen.

Weiterbildend wird vorgeschlagen, dass der Anregungsstrahlengang oder/und - im Falle einer Realisierung des entsprechenden Weiterbildungsvorschlags - der diesem zugeordnete Abführstrahlengang zumindest abschnittsweise, jedenfalls in einem im Objektbereich endenden und auf die Grenzfläche treffenden Abschnitt, durch den Beobachtungsstrahlengang verläuft oder mit diesem zusammenfällt. Es wird speziell daran gedacht, dass der Anregungsstrahlengang oder/und - im Falle der Realisierung des Weiterbildungsvorschlags- der diesem zugeordnete Abführstrahlengang durch die Optik führt.

Von möglicherweise in Frage kommenden speziellen Ausgestaltungen der Objektuntersuchungseinrichtung abgesehen, wird der Beobachtungsstrahlengang in der Regel als Mikroskopstrahlengang ausgeführt sein. Die Objektuntersuchungseinrichtung ermöglicht damit die oben angesprochenen TIRF-mikroskopischen Anwendungen und Untersuchungen.

Betreffend die Führung bzw. den Verlauf der verschiedenen angesprochenen Strahlengänge bestehen im Prinzip vielfältige Möglichkeiten. Es wird insbesondere daran gedacht, dass der Beobachtungsstrahlengang zumindest abschnittsweise im Wesentlichen gleichachsig zur Optik verläuft. Eine Möglichkeit ist, dass der Beobachtungsstrahlengang geknickt verläuft und einen vorzugsweise zur Optik im Wesentlichen gleichachsigen ersten Abschnitt und einen unter einem Winkel hierzu verlaufenden, mittels eines optischen Umlenkelements am ersten Abschnitt angeschlossenen zweiten Abschnitt aufweist.

Betreffend den Beleuchtungsstrahlengang, insbesondere Auflicht-Beleuchtungsstrahlengang, wird vor allem daran gedacht, dass dieser zumindest abschnittsweise im Wesentlichen gleichachsig oder im Wesentlichen parallelachsig zur Optik verläuft. Auch für den Anregungsstrahlengang kann vorgesehen sein, dass dieser zumindest abschnittsweise im Wesentlichen gleichachsig oder im Wesentlichen parallelachsig zur Optik verläuft.

Nach einer Ausgestaltungsmöglichkeit ist vorgesehen, dass vom Beleuchtungsstrahlengang und Anregungsstrahlengang wenigstens einer geknickt verläuft und einen vorzugsweise zur Optik im Wesentlichen gleichachsigen oder im Wesentlichen parallelachsigen ersten Abschnitt und einen unter einem Winkel hierzu verlaufenden, mittels eines optischen Umlenkelements am ersten Abschnitt angeschlossenen zweiten Abschnitt aufweist. Beispielsweise kann vorgesehen sein, dass nur einer der Strahlengänge geknickt und der andere Strahlengang im Wesentlichen geradlinig verläuft. So kann beispielsweise der Anregungsstrahlengang geknickt und dementsprechend der Beleuchtungsstrahlengang geradlinig verlaufen. Allgemein wird vorgeschlagen, dass der Anregungsstrahlengang oder/und der Beleuchtungsstrahlengang geknickt verläuft.

Auch betreffend den Abführstrahlengang wird vorgeschlagen, dass dieser zumindest abschnittsweise im Wesentlichen gleichachsig oder im Wesentlichen parallelachsig zur Optik verläuft. Ferner wird für den Abführstrahlengang vorgeschlagen, dass dieser geknickt verläuft und einen vorzugsweise zur Optik im Wesentlichen gleichachsigen oder im Wesentlichen parallelachsigen ersten Abschnitt und einen unter einem Winkel hierzu verlaufenden, mittels eines optischen Umlenkelements am ersten Abschnitt angeschlossenen zweiten Abschnitt aufweist.

Allgemein wird vorgeschlagen, dass dem Anregungsstrahlengang wenigstens eine im Wesentlichen kohärentes oder/und im Wesentlichen paralleles Anregungslicht abgebende Anregungslichtquelle, insbesondere wenigstens eine Laserlichtquelle, zugeordnet ist, und der Anregungsstrahlengang derart ausgeführt ist, dass das Anregungslicht vor Erreichen des Objektträgers in wenigstens eine Zwischenebene fokussiert wird. Dabei kann das Anregungslicht in eine Fokusebene oder Pupillenebene der Optik fokussiert werden. Es wird vor allem daran gedacht, dass das Anregungslicht in die Pupillenebene der Optik fokussiert wird, vorzugsweise im Wege einer vorausgehenden Fokussierung des Anregungslichts in wenigstens eine zur Pupillenebene der Optik konjugierte Pupillenebene.

Es wurde zumindest indirekt schon die Möglichkeit angesprochen, dass der Objektbereich über wenigstens einen Beleuchtungsstrahlengang, insbesondere Auflicht-Beleuchtungsstrahlengang, mitBeleuchtungslichtvon einer zugeordneten Lichtquelle oder einem zugeordneten Lichtausgang beleuchtbar ist, das zur Fluoreszenzanregung über einen gegenüber dem Tiefenwirkungsbereich der evaneszenten elektromagnetischen Felder deutlich größeren Tiefenbereich des Objektbereich dient. Ferner besteht offensichtlich die ebenfalls zumindest indirekt schon angesprochene Möglichkeit, dass der Objektbereich über wenigstens einen Beleuchtungsstrahlengang, insbesondere Auflicht-Beleuchtungsstrahlengang, mit Beleuchtungslicht von einer zugeordneten Lichtquelle oder einem zugeordneten Lichtausgang beleuchtbar ist, um über den Beobachtungsstrahlengang ein Beleuchtungslicht-Bild in den Bildbereich oder Beobachtungsbereich abzubilden.

Vorteilhafte Weiterbildungsmöglichkeiten vor allem im Zusammenhang mit dem wenigstens einen Abführstrahlengang sind unter anderem die folgenden:

Man kann vorsehen, dass der Anregungsstrahlengang oder/und der Abführstrahlengang durch wenigstens eine Linse oder Linsenanordnung, insbesondere wenigstens eine Linse oder Linsenanordnung im Sinne einer Tubuslinse des/eines Beleuchtungsstrahlengangs, insbesondere Auflicht-Beleuchtungsstrahlengangs, verläuft. In diesem Zusammenhang wird daran gedacht, dass nur der Anregungsstrahlengang, nicht aber der Abführstrahlengang durch die wenigstens eine Linse oder Linsenanordnung verläuft. Eine andere Möglichkeit ist, dass nur der Abführstrahlengang, nicht aber der Anregungsstrahlengang, durch die wenigstens eine Linse oder Linsenanordnung verläuft. Man kann aber auch vorsehen, dass sowohl der Abführstrahlengang als auch der Anregungsstrahlengang durch die wenigstens eine Linse oder Linsenanordnung verläuft.

Alternativ wird vorgeschlagen, dass ein/der Beleuchtungsstrahlengang, insbesondere Auflicht-Beleuchtungsstrahlengang wenigstens eine Linse oder Linsenanordnung im Sinne einer Tubuslinse aufweist und weder der Anregungsstrahlengang noch der Abführstrahlengang durch diese Linse oder Linsenanordnung verläuft.

Vorteilhafte Weiterbildungsvorschläge vor allem zum auf die Vermeidung von Abbildungsfehlern für die Zufuhr der Anregungsstrahlung zielenden Weiterbildungsvorschlag sind unter anderem die folgenden:

In der Regel wird es zweckmäßig sein, dass eine zentrisch zur Linsenanordnung verlaufende optische Achse der Linsenanordnung gegenüber einer zentrisch zur Optik verlaufenden optischen Achse der Optik seitlich versetzt ist, wobei die beiden optischen Achsen vorzugsweise im Wesentlichen zueinander parallel verlaufen. Dabei kann man einen Seitenversatz der beiden Achsen kleiner oder gleich dem halben Durchmesser einer Eintrittspupille der Optik vorsehen, vorzugsweise etwa gleich dem halben Durchmesser der Eintrittspupille.

Die Linsenanordnung kann eine der Optik nähere erste Linse oder erste Linsen-Teilanordnung, insbesondere im Sinne einer Tubuslinse, sowie eine von der Optik weiter entfernt liegende zweite Linse oder zweite Linsen-Teilanordnung, umfassen.

Ferner wird vorgeschlagen, dass das Beleuchtungslicht der Linsenanordnung über eine weitere Linse oder Linsenanordnung zuführbar ist, wobei das Beleuchtungslicht vorzugsweise zentrisch durch die weitere Linse oder Linsenanordnung tritt. Dabei wird es in der Regel zweckmäßig sein, wenn eine zentrisch zur weiteren Linse oder Linsenanordnung verlaufende optische Achse gegenüber der optischen Achse der Linsenanordnung um einen ersten Versatzwert und gegenüber der optischen Achse der Optik um einen den ersten Versatzwert übersteigenden zweiten Versatzwert seitlich versetzt ist und vorzugsweise zu wenigstens einer dieser optischen Achsen parallel verläuft.

Vorteilhafte Weiterbildungsvorschläge vor allem zur hier im Vordergund stehenden Erfindung sind unter anderem die folgenden:

Es wird vor allem daran gedacht, dass die Anregungsstrahlengänge insgesamt als nicht an ein lichtführendes Medium gebundene Freistrahlungs-Strahlengänge ausgeführt sind. Eine (jeweilige) Lichtleiterfaser oder dergleichen, die Licht über ihr Faserende, den "Lichtausgang", in den (jeweiligen) Anregungsstrahlengang einspeist, wird nach der hier zugrundegelegten Betrachtungsweise bzw. Definition nicht als Teil des (betreffenden) Anregungsstrahlengangs angesehen.

Nach einer sehr sinnvollen Ausgestaltungsmöglichkeit ist vorgesehen, dass die Freistrahlungs-Strahlengangabschnitte mehrerer Anregungsstrahlengänge von einem jeweiligen Lichtausgang oder einer jeweiligen Lichtquelle ausgehend gesondert voneinander verlaufen und dann in einen in Richtung zum Objektbereich führenden gemeinsamen Freistrahlungs-Strahlengangabschnitt übergehen. Es wird vor allem speziell daran gedacht, dass der gemeinsame Freistrahlungs-Strahlengangabschnitt, der ggf. durch die aus dem Objektbereich abbildende Optik führt, durch den Objektbereich geht oder in diesem endet. Der gemeinsame Freistrahlungs-Strahlengangabschnitt geht also nicht etwa noch in einen an ein lichtführendes Medium gebundenen Strahlengangabschnitt, etwa in eine Lichtleitfaser oder dergleichen, über.

Weiterbildend wird vorgeschlagen, dass wenigstens ein die Freistrahlungs-Strahlengangabschnitte zum gemeinsamen Freistrahlungs-Strahlengangabschnitt zusammenführendes Zusammenführelement vorgesehen ist. Das Zusammenführelement kann Umlenkeigenschaften in Bezug auf wenigstens einen der Freistrahlungs-Strahlengangabschnitte aufweisen, beispielsweise als Spiegel, Prisma oder Gitter ausgeführt sein. **Das Zusammenführelement kann ferner** Wellenlängenselektionseigenschaften in Bezug auf über wenigstens einen der Freistrahlungs-Strahlengangabschnitte zugeführtes Anregungslicht aufweisen, es wird wiederum auf die Beispiele Spiegel (etwa dichroitischer Spiegel), Prisma und Gitter, verwiesen.

Eine andere, ebenfalls sehr vorteilhafte Möglichkeit ist, dass die Freistrahlungs-Strahlengangabschnitte mehrerer Anregungsstrahlengänge jeweils von einem zugeordneten Lichtausgang oder einer zugeordneten Lichtquelle ausgehend gesondert verlaufen und in Richtung zum Objektbereich führen, ohne zusammengeführt zu werden. Es wird vor allem speziell daran gedacht, dass die gesondert verlaufenden Freistrahlungs-Strahlengangabshnitte, die ggf. durch die aus dem Objektbereich abbildende Optik führen, jeweils durch den Objektbereich gehen oder in diesem enden. Die Freistrahlungs-Strahlengangabschnitte gehen also nicht etwa noch in einen jeweiligen, an ein lichtführendes Medium gebundenen Strahlengangabschnitt, etwa in eine Lichtleitfaser oder dergleichen, über. Es können die Anregungsstrahlengänge völlig gesondert voneinander verlaufen.

Es wird beispielsweise daran gedacht, dass die Freistrahlungs-Strahlengangabschnitte jeweils einen sich längs einer Zufuhrachse, vorzugsweise parallel zu der Zufuhrachse erstreckenden Abschnitt aufweisen, und dass diese sich längs der bzw. parallel zur Zufuhrachse erstreckenden Abschnitte um die Achse winkelmäßig gegeneinander versetzt sind. In diesem Zusammenhang wird weiterbildend vorgeschlagen, dass die sich längs der bzw. parallel zur Zufuhrachse erstreckenden Abschnitte einen zur Zufuhrachse konzentrischen virtuellen Kreisring schneiden. Die Zuführachse kann beispielsweise von einer/der zur oben angesprochenen Optik, insbesondere Mikroskopobjektiv, zentrisch verlaufenden optischen Achse der Optik gebildet sein.

Wie oben schon zumindest indirekt angesprochen, können den Anregungsstrahlengängen Lichtquellen, insbesondere Laserlichtquellen, verschiedener Anregungswellenlängen, zugeordnet sein, insbesondere für die viele Untersuchungsmöglichkeiten gebende Vielfarben-TIRF-Methode. Es wird in diesem Zusammenhang daran gedacht, dass die verschiedenen Anregungswellenlängen über einen jeweiligen Lichtleiter, insbesondere Lichtleiterfaser oder Lichtleiterfaserbündel, am jeweiligen Anregungsstrahlengang bzw. am jeweiligen Freistrahlungs-Strahlengangabschnitt angeschlossen sind. Verallgemeinert wird vorgeschlagen, dass den Anregungsstrahlengängen Lichtquellen, insbesondere Laserlichtquellen, verschiedener Anregungswellenlänge zugeordnet sind, von denen der jeweilige Anregungsstrahlengang bzw. der jeweilige Freistrahlungs-Strahlengangabschnitt ausgeht oder die über einen jeweiligen Lichtleiter, insbesondere Lichtleiterfaser odre Lichtleiterfaserbündel, am jeweiligen Anregungsstrahlengang bzw. am jeweiligen Freistrahlungs-Strahlengangabschnitt angeschlossen sind. Anders ausgedrückt kann wenigstens ein Anregungsstrahlengang bzw. wenigstens ein Freistrahlungs-Strahlengangabschnitt von der zugeordneten Lichtquelle ausgehen. Ferner kann wenigstens ein Anregungsstrahlengang bzw. wenigstens ein Freistrahlungs-Strahlengangabschnitt von einem als Lichtausgang dienenden Lichtleiterende eines jeweiligen Lichtleiters ausgeht. Man kann durchaus vorsehen, dass bei einer Objektuntersuchungseinrichtung einer oder mehrere Anregungsstrahlengänge bzw. einer oder mehrere Freistrahlungs-Strahlengangabschnitte von ihrer jeweils zugeordneten Lichtquelle ausgehen, und dass wenigstens ein anderer Anregungsstrahlengang bzw. wenigstens ein anderer Freistrahlungs-Strahlengangabschnitt von einem als Lichtausgang dienenden Lichtleiterende einer jeweiligen Lichtleiter ausgeht.

Vorzugsweise sind die Lichtleiter für die jeweils zu führende Anregungswellenlänge oder Anregungswellenlängen als Monomodefaser ausgeführt, wobei im Falle von mehreren Anregungswellenlängen diese zur Erreichung der erfindungsgemäßen Vorteile normalerweise in einem engen Wellenlängenintervall liegen sollten. Die Lichtleiter können an die jeweils zu führende Anregungswellenlänge bzw. Anregungswellenlängen im Hinblick auf eine Minimierung von Intensitätsverlusten angepasst sein.

Als besonders bevorzugt wird vorgeschlagen, dass zumindest einige der Anregungsstrahlengänge unabhängig voneinander in Bezug auf eine Einstellung des Einfallswinkels des jeweiligen Anregungslichts justierbar sind. Diese ausgestaltung ist deswegen besonders zweckmäßig, weil aufgrund von chromatischen Effekten, insbesondere bei etwas weiter auseinander liegenden Anregungswellenlängen, die für eine Wellenlänge optimale Einstellung für eine andere Wellenlänge nicht optimal sein kann, ggf. sogar derart, dass das Anregungslicht als "normale Strahlung" durch die Grenzfläche tritt. Es kann insbesondere angezeigt sein, dass das Anregungslicht unterschiedlicher Wellenlänge durch unterschiedliche, zur Zufuhrachse konzentrische virtuelle Kreisringe treten sollte, um eine optimale TIRF-Einkopplung zu erreichen. Die entsprechende Einstellung der Anregungsstrahlengänge kann beispielsweise durch eine Verstellung eines in Richtung parallel zur Zufuhrachse umlenkendes Umlenkelement oder/und durch Verstellung des Lichtausgangs (etwa Glasfaserende) bzw. der Lichtquelle oder/und durch Verstellung anderer optischer Komponenten des jeweiligen Anregungsstrahlengangs erfolgen.

Allgemein wird für eine erfindungsgemäße Objektuntersuchungseinrichtung noch Folgendes vorgeschlagen:

Die Objektuntersuchungseinrichtung kann ein wenigstens den Objektbereich, den Beobachtungsstrahlengang und - wenn vorgesehen - wenigstens einen Beleuchtungsstrahlengang aufweisendes Mikroskop bilden oder umfassen. Das Mikroskop kann als Aufrecht-Mikroskop oder - vorzugsweise - als Invers-Mikroskop ausgeführt sein. Es wird vor allem daran gedacht, dass das Mikroskop als über den Beobachtungsstrahlengang optisch ein Bild in den Bildbereich oder Beobachtungsbereich abbildendes Abbildungsmikroskop ausgeführt ist, im Gegensatz zu einem als konfokales Mikroskop oder/und Laserscan-Mikroskop ausgeführten Mikroskop. Es soll aber die Ausführung des Mikroskops als konfokales Mikroskop oder/und als Laserscan-Mikroskop im Rahmen der Ausführung der Erfindungsvorschläge nicht ausgeschlossen sein.

In der Regel wird die Objektuntersuchungseinrichtung eine Fluoreszenz-Messvorrichtung bilden oder umfassen, die wenigstens den Objektbereich, den Beobachtungsstrahlengang und den Anregungsstrahlengang aufweist sowie ggf. das Mikroskop umfasst.

Die Erfindung und im Zusammenhang mit der Erfindung in Frage kommende, zu eigenen Vorteilen führende Ausgestaltungen werden im Folgenden anhang von in den Figuren gezeigten, keinesfalls beschränkend auszulegenden Ausführungsbeispielen näher erläutert.
- Fig. 1: ist eine schematische Darstellung zur Erläuterung des Prinzips der TIRF-Mikroskopie und beruht auf der Fig. 1 (a) des Aufsatzes "Dual-colour microscopy of single fluorophores bound to myosin interacting with fluorescently labelled actin using anti-Stokes fluorescence" von K. Saito et al., Journal of Microscopy, Vol. 188, Pt 3, Dezember 1997, Seiten 255-263.
- Fig. 2: ist eine schematische Darstellung der TIRF-Fluoreszenz-Anregung und dient zur Erläuterung von beispielhaften Untersuchungssituationen.
- Fig. 3: zeigt schematisch wesentliche Bestandteile eines Ausführungsbeispiels einer Objektuntersuchungseinrichtung, die eine TIRF-Fluoreszenzanregung vermittels eines in einen konventionellen Beleuchtungsstrahlengang eingespiegelten TIRF-Anregungslaserstrahls ermöglicht.
- Fig. 4: zeigt schematisch eine Ausführungsvariante, bei der für den TIRF-Anregungslaserstrahl eine geradlinige Strahlenführung vorgesehen ist und die konventionelle Beleuchtung von der Seite her eingespiegelt wird.
- Fig. 5: zeigt t schematisch ein Beispiel einer Objektuntersuchungseinrichtung für TIRF-Mikroskopie, wie an sich aus dem Stand der Technik bekannt.
- Fig. 6: zeigt eine Weiterbildung der Objektuntersuchungseinrichtung der Fig. 5.
- Fig. 7: zeigt schematisch ein erstes erfindungsgemäßes Ausführungsbeispiel einer Mehrfarben- oder Vielfarben-TIRF-Einkopplung.
- Fig. 8: zeigt ein zweites Ausführungsbeispiel einer erfindungsgemäßen Mehrfarben- oder Vielfarben-TIRF-Einkopplung.
- Fig. 9: zeigt ein drittes Ausführungsbeispiel einer erfindungsgemäßen Mehrfarben- oder Vielfarben-TIRF-Einkopplung.
- Fig. 10: zeigt ein weiteres Ausführungsbeispiel einer Mehrfarben- oder Vielfarben-TIRF-Einkopplung, bei der mehrere Anregungsstrahlengänge individuell betreffend den TIRF-Einkopplungswinkel einstellbar sind.
- Fig. 11: zeigt ein weiteres Ausführungsbeispiel einer Mehrfarben- oder Vielfarben-TIRF-Einkopplung, bei der mehrere Anregungsstrahlengänge individuell betreffend den TIRF-Einkopplungswinkel einstellbar sind.

Die TIRF (Total Internal Reflection Fluorescence)-Mikroskopie oder allgemein TIRF-Objektuntersuchung ist eine Methode, Anregungslicht, vorzugsweise Laserlicht, zur Anregung von Fluoreszenzmolekülen nahe dem Totalreflektionswinkel in einen Objektträger einzukoppeln. Bei Totalreflektion dringt eine so genannte evaneszente (abklingende) Welle beispielsweise einige 10 nm in das optisch dünnere Medium des Untersuchungsobjekts bzw. eines das Untersuchungsobjekt enthaltenen Umgebungsmediums (beispielsweise Wasser oder eine wässrige Lösung) ein und kann Farbstoffmoleküle zu Fluoreszenz anregen, beispielsweise Markermoleküle des Untersuchungsobjekts bzw. der Untersuchungsobjekte. In Kombination mit einem Mikroskop erlaubt die Methode beispielsweise, an lebenden biologischen Zellen membranassoziierte Prozesse oder sogar Einzelmoleküldynamiken sichtbar zu machen. Die Methode ist in der wissenschaftlichen Literatur ausführlich beschrieben, es wird beispielsweise auf den Aufsatz "Dual-colourmicroscopy of single fluorophores bound to myosin interacting with fluorescently labelled actin using anti-Stokes fluorescence" von K. Saito et al., Journal of Microscopy, Vol. 188, Pt 3, Dezember 1997, Seiten 255-263, verwiesen.

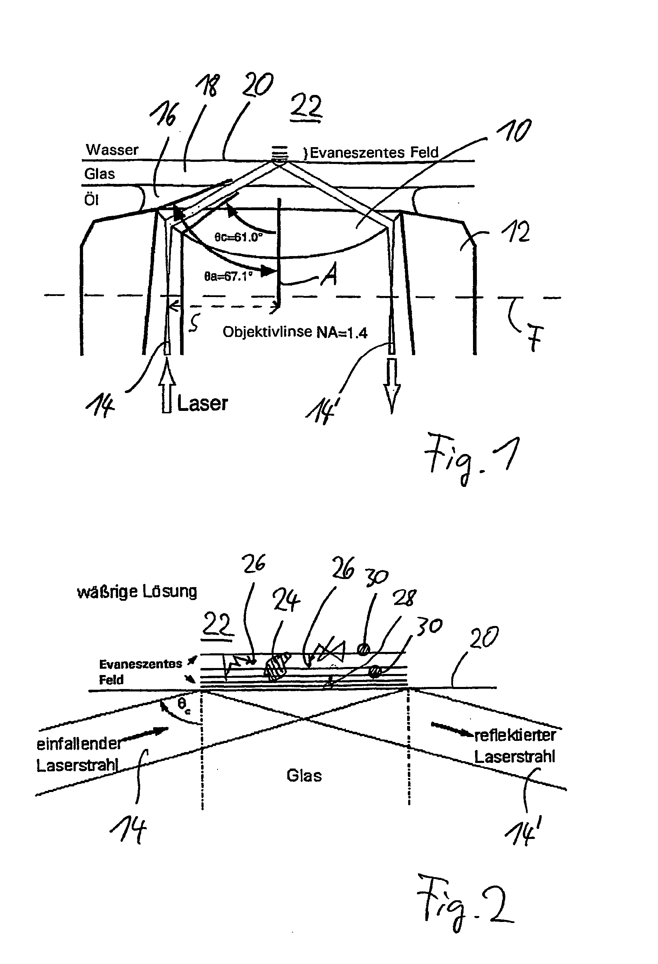

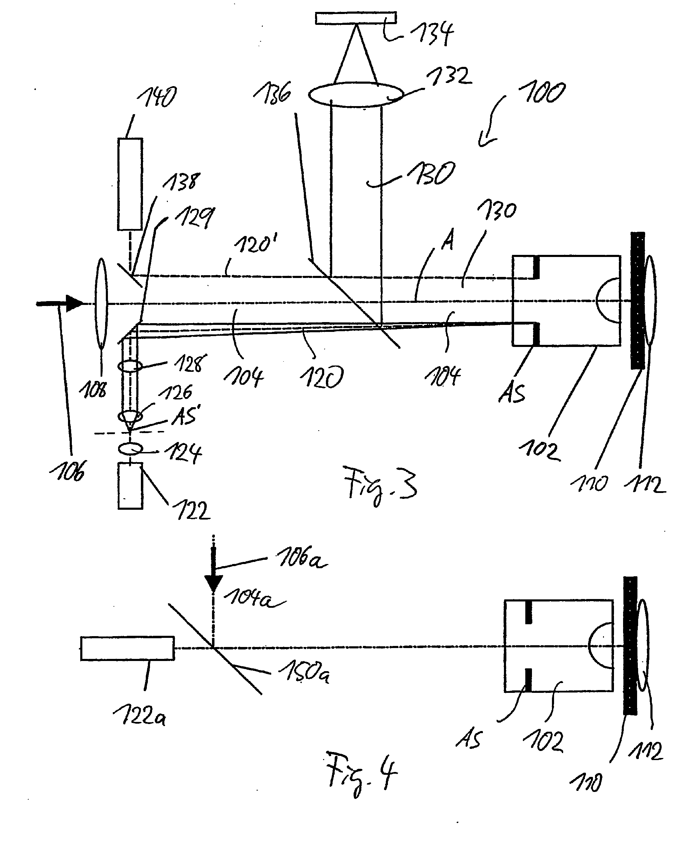

Fig. 1 zeigt einen Ausschnitt aus einer TIRF-Mikroskopie-Anordnung, die an sich bekannt ist. Fig. 1 beruht auf der Fig. 1 (a) des genannten Aufsatzes. Verwendet wird eine Objektivlinse 10 mit hoher nummerischer Apertur, die in einem Mikroskopobjektivgehäuse 12 eines invertierten Mikroskops gehalten ist. Ein Laserstrahl 14 eines Dauerstrich-Nd: YAG-Lasers mit einer Emissionswellenlänge von 532 nm wird durch eine Linsenanordnung in die rückwärtige Fokusebene F der Objektivlinse 10 fokussiert, und zwar in einem Seitenabstand S zur optischen Achse A, so dass das aus der Linse 10 zuerst in ein ÖI-Immersionsmedium 16 und dann in einen Glas-Objektträger 18 eintretende Laserlicht unter einem Winkel auf eine Grenzfläche 20 zwischen dem Objektträger 18 und einem demgegenüber optisch dünneren Medium, hier Wasser 22, trifft, dass das Laserlicht an der Grenzfläche 20 totalreflektiert wird und in das optisch dünnere Medium nur evaneszente elektromagnetische Felder eintreten. Es wird darauf hingewiesen, dass nach einer abstrahierten Betrachtungsweise die Fokusebene F gleich der Pupillenebene des Mikroskopobjektivs ist, die im Zusammenhang mit der Ausführungsbeispielen der Fig. 3 bis 9 mit AS bezeichnet wird.

Der an der Grenzfläche reflektierte Laserstrahl 14' tritt symmetrisch zur optischen Achse A durch die Linse 10 wieder in das Objektivgehäuse 12 ein.

Das in das optisch dünnere Medium eintretende evaneszente Feld ist in enger Nachbarschaft zur Grenzfläche 20 stark genug, Fluoreszenzfarbstoffe, insbesondere Fluoreszenzmoleküle, zu Fluoreszenz anzuregen. Fig. 2 zeigt schematisch Beispiele von an sich bekannten

Untersuchungssituationen. Beispielsweise können ausgedehntere Objekte, insbesondere biologische Objekte 24, durch die TIRF-Methode fluoreszenzmikroskopisch untersucht werden. Es kann sich beilspielsweise um biologische Zellen oder Zellfragmente handeln. Ferner kann beispielsweise die durch Pfeile angedeutete schnelle Diffusion von interessierenden Einzelmolekülen 26, ggf. auch deren Bindung und Abdissoziation an einem zugeordnete Zielmolekül 28, untersucht werden. Das Zielmolekül 28 kann beispielsweise am Objektträger immobilisiert sein. Als Zielmolekül könnte beispielsweise ein Myosinmolekül verwendet werden und die Einzelmoleküle könnten ATP-Moleküle sein. Entsprechende Untersuchungen wurden beispielsweise von der Medizinischen Hochschule Hannover, Abteilung Molekular- und Zellphysiologie, im Jahre 1999, durchgeführt. Zur Bestimmung der Vertikalposition der Einzelmoleküle im evaneszenten Feld können fluoreszenzmarkierte Beads 30 verwendet werden, die mit zunehmender Eindringtiefe ins evaneszente Feld (näher zur Grenzschicht) stärker angeregt werden, so dass ihre Fluoreszenzintensität ein Maß für ihre vertikale Position im evaneszenten Feld ist.

Die vorstehenden, sich auf die Fig. 1 und 2 beziehenden Ausführungen sollen rein exemplarisch in das Thema "TIRF-Mikroskopie" und einige in diesem Zusammenhang interessierende Fragestellungen einführen und sollen insoweit den Zugang zur folgenden Erläuterung der Erfindung und ihrer verschiedenen Aspekte anhand von mehreren Ausführungsbeispielen erleichtern. Auf die sehr umfangreiche wissenschaftliche Literatur zum Thema TIRF-Mikroskopie wird ausdrücklich ergänzend verwiesen.

Wesentliche Aspekte der Erfindung, die im Folgenden anhand der Ausführungsbeispiele angesprochen werden, beziehen sich auf
1. eine effektive Unterdrückung von unerwünschtem Anregungslicht,
2. eine optimierte Einkopplung des TIRF-Anregungslichts und
3. eine optimierte Einkopplung mehrerer TIRF-Anregungswellenlängen.

Es werden diesbezüglich technisch einfach realisierbare und einfach zu handhabende Lösungsvorschläge betreffend eine die Zielsetzungen erfüllende Mikroskopeinkopplung gemacht.

Fig. 3 zeigt eine TIRF-Mikroskopie-Anordnung 100 mit einem an sich herkömmlichen Mikroskopobjektiv 102, das eine hinreichend große nummerische Appartur NA und eine Pupillenöffnung hinreichend großen Durchmessers aufweist. Auf an sich bekannte Weise wird über einen Beleuchtungsstrahlengang 104 eine konventionelle Beleuchtung 106 über das Mikroskopobjektiv 102 zugeführt, die beispielsweise das gesamte Bildfeld des Objektbereichs ausleuchtet. Beispielsweise kann eine kritische Beleuchtung realisiert sein, bei der etwa das Austrittsende einer Glasfaser durch eine Tubuslinse 108 ins Unendliche und dann durch die Linsenanordnung des Objektivs 102 auf die Objektebene abgebildet wird. Es können auch andere im Fachgebiet bekannte Beleuchtungsarten, etwa die so genannte Köhler'sche Beleuchtung, realisiert sein.

Ein durchsichtiger Objektträger 110, beispielsweise aus Glas, trägt ein Untersuchungsobjekt 112, und die konventionelle Beleuchtung beleuchtet das Untersuchungsobjekt 112 durch den Objektträger 110. Die Anordnung entspricht insoweit einem Invers-Mikroskop.

Zur TIRF-Anregung wird ein Laserstrahl in einem radialen Außenbereich der Eintrittsöffnung des Objektivs 102 eingestrahlt, derart, dass das Laserlicht nur unter einem Winkel größer oder gleich dem Winkel der Totalreflektion auf eine Grenzfläche des Objektträgers zum Objekt 112 bzw. dem diesen umgebenden Umgebungsmedium (etwa Wasser oder eine wässrige Lösung) trifft und dementsprechend an dieser Grenzfläche totalreflektiert wird, wie vorstehend anhand der Fig. 1 und 2 erläutert. Der Anregungslaserstrahl 120 wird von einer geeigneten Laserlichtquelle 122 abgegeben und wie folgt in das Objektiv 102 und damit als evaneszente Felder in den Objektträger 110 eingekoppelt. Die Laserstrahlung wird durch eine Linsenoptik 124 in eine zur Pupille bzw. Pupillenebene AS des Objektivs 102 konjugierte Pupillenebene AS' fokussiert bzw. abgebildet. Durch eine weitere Linsenoptik 126 erfolgt eine Abbildung des Laserlichts ins Unendliche und dann von einer noch weiteren Linsenoptik 128 unter Vermittlung eines Umlenkspiegels 129 oder sonstigen Umlenkelements in die Pupillenebene AS unter Fokussierung auf einen möglichst kleinen Punkt. Aus dieser Pupillenebene erfolgt dann eine Abbildung ins Unendliche mit einem dem Radius des Punktes bezogen auf die optische Achse A entsprechenden Winkel, mit entsprechender winkelmäßiger Umlenkung, so dass idealerweise nur Einfallswinkel größer als der Grenzwinkel der Totalreflektion zum Einfallslot auf die Grenzfläche zwischen dem Objektträger 110 einerseits und dem Objekt bzw. Objektumgebungsmedium andererseits auftreten.

Im Objekt bzw. Objektbereich in Folge der TIRF-Einkopplung entstehendes Fluoreszenzlicht sowie auf der konventionellen Beleuchtung 106 beruhendes Beleuchtungslicht wird über einen das Objektiv 102 aufweisenden Beobachtungsstrahlengang 130 unter Vermittlung einer Abbildungsoptik 132 auf einen ortsauflösenden Detektor 134, beispielsweise ein CCD-Feld, abgebildet. Der Beobachtungsstrahlengang 130 fällt in einem zum Objektiv 102 näheren Bereich mit dem Beleuchtungsstrahlengang 104 zusammen, und das dem Detektor 134 zuzuführende Beobachtungslicht wird durch einen dichroitischen Spiegel 136, durch den die konventionelle Beleuchtung 106 und der Anregungslaserstrahl 120 tritt, seitwärts abgelenkt.

Das Vorsehen der konventionellen Beleuchtung neben der TIRF-Beleuchtung macht es möglich, gleichzeitig und nacheinander jeweils interessierende Untersuchungsobjekte in verschiedenen Modi zu beleuchten. Beispielsweise kann mit der konventionellen Beleuchtung ein großes Bildfeld beleuchtet werden (so genannte Wide-Field-Beleuchtung). Damit kann die gesamte darin befindliche Probe auch in der Tiefe, jenseits dem von den evaneszenten Feldern erfassten Grenzbereich zur Grenzfläche, zur Fluoreszenz angeregt werden, wohingegen mit der TIRF-Beleuchtung nur in der angesprochenen dünnen Grenzschicht zur Grenzfläche zur Fluoreszenz angeregt wird, welche an den Objektträger 110, in den das Anregungslicht im Wege der TIRF-Einkopplung eingekoppelt wird, angrenzt bzw. diesem sehr nahe ist.

Angemerkt sei noch, dass es nicht zwingend ist, die konventionelle Beleuchtung über den Fluoreszenzstrahlengang der Objektuntersuchungseinrichtung bzw. des entsprechenden Mikroskops mittels einer Tubuslinse einzukoppeln. Es kommt durchaus auch eine konventionelle Durchlicht-Beleuchtung in Betracht.

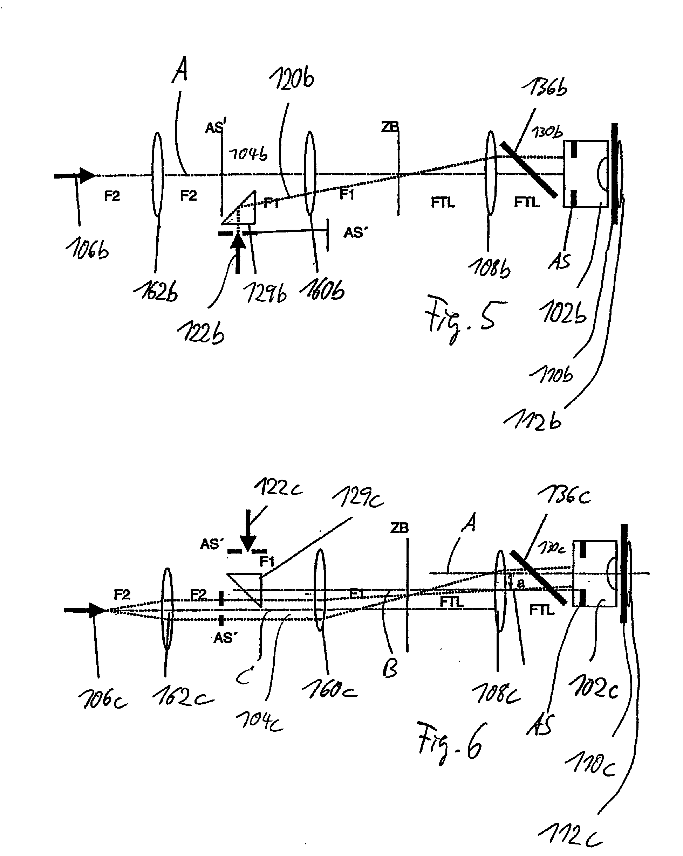

Abwandlungen der Anordnung gemäß Fig. 3 sind ohne weiteres möglich. So kann man beispielsweise den TIRF-Laserstrahl durch die Tubuslinse 108 für die konventionelle Beleuchtung führen (vgl. Fig. 5). Herkömmlich erfolgt dies azentrisch bezogen auf die betreffende Linsenanordnung des Mikroskopstrahlengangs, was den erheblichen Nachteil mit sich bringt, dass es zum Auftreten von Abbildungsfehlern kommt. Ferner führt die Einbringung von Umlenkelementen, wie etwa Prismen und Spiegeln, in den Beleuchtungsstrahlengang der konventionellen Beleuchtung zu einer nachteiligen Vignettierung der konventionellen Beleuchtung.

Demgegenüber wird bei der Anordnung gemäß Fig. 3 mit der Optik 128 eine eigene "Lasertubuslinse" verwendet, die zentrisch betrieben wird und insoweit Abbildungsfehler vermeidet. Wie erläutert, wird der TIRF-Laserstrahl über die Optik 128 (kann als "Lasertubuslinse" aufgefasst werden) und die Umlenkeinheit 129 zwischen der Beleuchtungstubuslinse 108 und dem Objektiv 102 in die Pupillenebene AS fokussiert. Der Durchmesser der Pupille AS ist in Abstimmung mit einem zwischen dem Objektiv 102 und dem Objektträger vorgesehenen Immersionsmedium und dem Material des Objektträgers und dem Medium des Untersuchungsobjekts bzw. dessen Umgebungsmedium geeignet ausgelegt, so dass die angesprochene Totalreflektion an der Grenzfläche zwischen dem Objektträger und dem Untersuchungsobjekt bzw. dem dieses umgebende Umgebungsmedium auftritt. Damit wird, wie in den Fig. 1 und 2 dargestellt, nahezu die gesamte eingestrahlte Anregungslichtintensität durch Totalreflektion symmetrisch rückreflektiert, und passiert erneut die Pupille AS des Objektivs. Vorteilhafterweise ist nun eine definierte Strahlführung für das rückreflektierte Anregungslicht vorgesehen, mit einer definierten Strahlfalle, die das an der Grenzfläche totalreflektierte Anregungslicht auffängt. Beim Ausführungsbeispiel der Fig. 3 wird der durch den dichroitischen Spiegel 136 tretende rückreflektierte Laserstrahl 120' durch ein Umlenkelement, beispielsweise einen Spiegel 138, seitwärts umgelenkt und trifft dann in die Strahlfalle 140.

Herkömmlich fällt bei TIRF-Mikroskopie-Anordnungen im Gegensatz zur erfindungsgemäßen Lösung das totalreflektierte Anregungslicht undefiniert auf irgendwelche Konstruktionselemente der betreffenden Objektuntersuchungseinrichtung, ggf. Mikroskop, und hat entsprechendes Streulicht zur Folge. Dieses Streulicht kann einerseits unter kleineren Winkeln als der Grenzwinkel der Totalreflektion auf die Grenzschicht treffen und damit, wie die konventionelle Beleuchtung, in die Tiefe des Objektbereichs eintreten und damit zu störender Hintergrundfluoreszenz führen. Andererseits kann das Streulicht auf den Detektor 134 treffen und damit ein schlechtes Signal-zu-Rausch-Verhältnis zur Folge haben. Beides führt zu einer deutlichen Erschwerung von gewünschten Untersuchungen, und macht diese unter Umständen sogar unmöglich, nämlich dann, wenn nur sehr schwache Fluoreszenzsignale auftreten, etwa beim Einzelmolekülnachweis.

Die Anordnung mit einem definierten Rückreflektionsstrahlengang für das Anregungslicht, hier den Anregungslaserstrahl, und einer definierten Strahlfallenanordnung vermeidet also störendes Streulicht und ermöglicht damit die Detektion sehr schwacher Fluoreszenzsignale, nämlich einmal durch Vermeidung von störender Hintergrundfluoreszenz und zum anderen durch Verbesserung des Signal-zu-Rausch-Verhältnisses am Detektor.

Wie schon erwähnt, kann man im Prinzip auf eine eigene "Lasertubuslinse" 128 verzichten und den Anregungslaserstrahl 120 durch die "Beleuchtungstubuslinse" 108 führen. In gleicher Weise ist es möglich, den rückreflektierten Anregungslaserstrahl 120' noch durch die "Beleuchtungstubuslinse" 108 fallen zu lassen und erst nach dieser Linse 108 das rückreflektierte Anregungslaserlicht durch die Strahlfalle aufzufangen, ggf. nach einer Umlenkung zur Seite hin. Insbesondere kann die Streulichtentfernung nach der Tubusebene in einer zur Pupillenebene AS konjugierten Pupillenebene erfolgen. Man kann sowohl den in Richtung zum Objektiv 102 propagierenden Anregungslaserstrahl 120 als auch den rückreflektierten Laserstrahl 120' durch die "Beleuchtungstubuslinse" 108 führen oder nur einen der beiden Laserstrahlen, nämlich entweder den Laserstrahl 120 oder den rückreflektierten Laserstrahl 120'.

Es sind noch diverse weitere Abwandlungen gegenüber der Anordnung der Fig. 3 möglich. Beispielsweise kann man, wie in Fig. 4 angedeutet, den Anregungslaserstrahl von der Laserlichtquelle 122a im Wesentlichen geradlinig, also ohne Umlenkung, in die Pupillenebene AS abbilden, also auf eine seitliche Einkopplung der TIRF-Beleuchtung über Spiegel und dergleichen verzichten, und stattdessen die konventionelle Beleuchtung 106a von der Seite über ein Umlenkelement einkoppeln, so dass sich ein "geknickter" Beleuchtungsstrahlengang für die konventionelle Beleuchtung ergibt. Beispielsweise kann ein dichroitischer Spiegel 150a verwendet werden, was allerdings den Nachteil hätte, dass die konventionelle Beleuchtung 106a eine andere Lichtwellenlänge als das Anregungslicht der TIRF-Beleuchtung haben müsste. Demgegenüber kann es zweckmäßiger sein, einen Umlenkspiegel 150a mit einem Loch für die Durchführung des TIRF-Laserstrahls zu verwenden.

Nachzutragen zu Fig. 3 und Fig. 4 ist noch, dass der fett eingezeichnete Pfeil 106 bzw. 106a symbolhaft beispielsweise für das Austrittsende eines Lichtleiters stehen kann, der die konventionelle Beleuchtung von einer entsprechenden Lichtquelle zuführt. Es ist ferner darauf hinzuweisen, dass man auch das Anregungslaserlicht über einen entsprechenden Lichtleiter dem jeweiligen Anregungsstrahlengang zuführen kann. Anstelle der einen jeweiligen Laser repräsentierenden Kästen 122 und 122a könnte ein entsprechendes Austrittsende des jeweiligen Lichtleiters in den Figuren eingezeichnet sein.

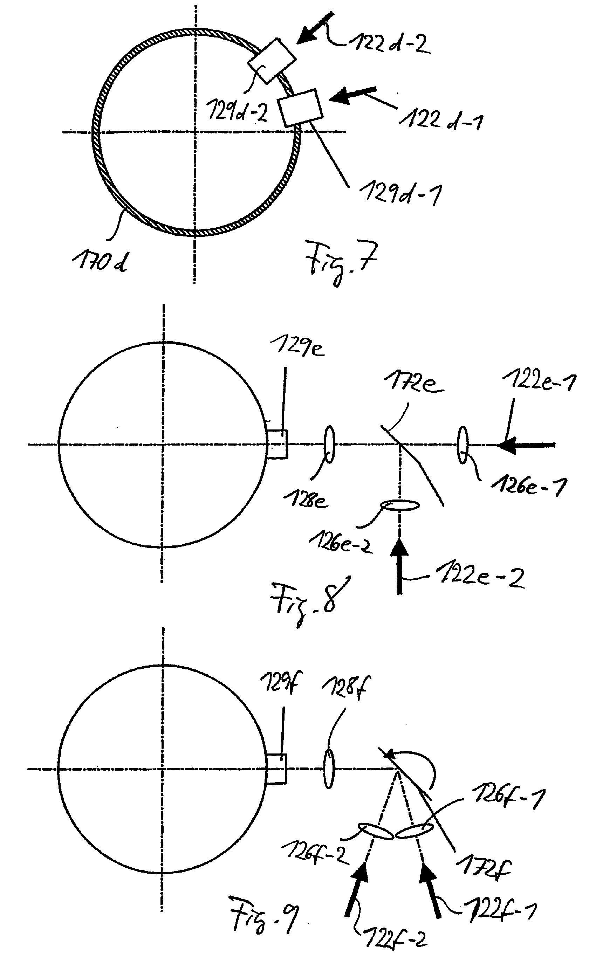

Die vorstehend schon angesprochene Fig. 5 zeigt eine an sich bekannte TIRF-Einkopplung. Es werden zur Erläuterung der Fig. 5 die gleichen Bezugszeichen wie in Fig. 3 für gleiche bzw. analoge Komponenten verwendet, unter Nachstellung eines die Ausführungsform der Fig. 5 kennzeichnenden kleinen Buchstabens "b", und nur die Unterschiede zur Ausführungsformel der Fig. 3 erläutert. Wie beim Ausführungsbeispiel der Fig. 3 kann eine definierte Strahlführung für den totalreflektierten Anregungslaserstrahl zu einer dezidierten Strahlfalle vorgesehen sein. Alternativ oder zusätzlich kann ein Erfindungsvorschlag nach einem weiteren (dritten) Aspekt der Erfindung realisiert sein, beispielsweise entsprechend den Fig. 7, 8 oder 9. Betreffend einen Weiterbildungsvorschlag der Erfindung dient die Fig. 5 zur Erläuterung von durch den Erfindungsvorschlag überwundenen Nachteilen des Standes der Technik.

Ausgehend vom Objektiv 102b erzeugt die Beleuchtungstubuslinse 108b im Abstand FTL ein Zwischenbild ZB. Über den dichroitischen Spiegel 136b wird ein geknickter Beobachtungsstrahlengang erzeugt, der das im Objektbereich erzeugte Fluoreszenzlicht auf einen nicht gezeigten Detektor, etwa einen CCD-Detektor wie der Detektor 134 der Fig. 3, lenkt. Im Abstand F1 zur Zwischenbildebene ZB befindet sich eine Linsenoptik 160b, beispielsweise gebildet von einer einzigen Linse, die im Abstand F1 ein Bild AS' der Pupille AS des Objektivs 102b erzeugt. Für die Einkopplung des Anregungslaserstrahls 120b ist als Umlenkelement ein Prisma 129b vorgesehen. In Kombination mit dem Prisma 129b erzeugt die Linsenoptik 160b ein weiteres Bild AS' der Pupille AS.

Wird als konventionelle Beleuchtung die Methode "kritische Beleuchtung" verwendet, so bildet eine Linsenoptik 162b, beispielsweise eine einzige Linse, zusammen mit der Linsenoptik 160b das durch den Pfeil 106b repräsentierte Lichtleiterende in die Zwischenebene ZB ab. Für die TIRF-Fluoreszenzanregung befindet sich der "Laserlichtausgang" genau in der über das Prisma seitlich abgebildeten konjugierten Pupille AS'. Als "Laserlichtausgang" kann hier beispielsweise das Austrittsende eines das Anregungslaserlicht von einer gesondert angeordnete Laserlichtquelle herführenden Lichtleiters (insbesondere Lichtleitfaser) oder alternativ der fokussierte Strahl des TIRF-Anregungslasers selbst vorgesehen sein. Die konjugierte Pupille AS' und damit der "Laserlichtausgang" wird mittels der Linsenoptik 160b und der Beleuchtungstubuslinse 108b in die Pupille AS des Objektivs 102b abgebildet. Wie erläutert, erfolgt die Einkopplung unter Vermittlung des Prismas 129b (oder alternativ eines Spiegels) über den auch die konventionelle Beleuchtung ermöglichenden Beleuchtungsstrahlengang.

Ein Problem bei der Anordnung der Fig. 5 ist, dass die Linsenoptik 160b und die Beleuchtungstubuslinse 108b für die TIRF-Laserstrahlung 120b weit außerhalb des Mittelbereichs der betreffenden Linse bzw. Optik genutzt wird. Die Laserbeleuchtung erfolgt also azentrisch durch diese Optiken, während die konventionelle Beleuchtung, wie in Fig. 5 zu erkennen, zentrisch erfolgt. Für die TIRF-Beleuchtung führt dies zu Abbildungsfehlern (beispielsweise Astigmatismus, Koma, usw.), die "falsche Winkel" an der Grenzebene des Objektträgers erzeugen können, an denen das TIRF-Laserlicht eigentlich totalreflektiert werden soll. Es können deshalb Einfallwinkel zum Einfallslot auftreten, die kleiner als der Grenzwinkel der Totalreflektion sind, so dass ein beachtlicher Anteil des Anregungslichts in das optisch dünnere Medium als "normale", nicht abklingende Strahlungsfelder eintritt und in der Tiefe des Objektbereichs zu Fluoreszenzanregungen und dementsprechend zu Hintergrundfluoreszenz führen kann. Es werden also Farbstoffmoleküle auch außerhalb der an die Grenzfläche angrenzenden Anregungsschicht, in der evaneszente Felder auftreten, zu Fluoreszenz angeregt, so dass der TIRF-Effekt nur unvollkommen erreicht wird.

Demgegenüber kann in Realisation eines Weiterbildungsvorschlags der Erfindung vorgesehen sein, die für die TIRF-Einkopplung wesentlichen Linsen in Bezug auf die in Richtung zur Grenzfläche des Objektträgers propagierende Anregungsstrahlung zentrisch zu nutzen. Fig. 6 zeigt ein entsprechendes Ausführungsbeispiel, bei der für die TIRF-Laserbeleuchtung eine zentrische Einkopplung und für die konventionelle Beleuchtung eines azentrische Einkopplung im Bezug auf die mit der konventionellen Beleuchtung gemeinsam genutzte Linsenanordnung vor dem Objektiv 102c vorgesehen ist.

Für das Ausführungsbeispiel in Fig. 6 werden wiederum die gleichen Bezugszeichen für analoge und identische Komponenten verwendet, wobei das Ausführungsbeispiel der Fig. 6 durch den nachgestellten kleinen Buchstaben "c" gekennzeichnet ist. Es werden nur die Unterschiede gegenüber dem Ausführungsbeispiel der Fig. 5 erläutert.

Ausgehend vom Objektiv 102c erzeugt die Beleuchtungstubuslinse 108c im Abstand FTL ein Zwischenbild ZB. Über den Dichroit 136c wird das Beobachtungslicht (insbesondere die Fluoreszenzstrahlung) über den Beobachtungsstrahlengang auf einen Detektor, etwa einen CCD-Detektor entsprechend dem Detektor 134, gelenkt. Im Abstand F1 befindet sich die Linsenoptik 108c, die beispielsweise von einer einzigen Linse gebildet ist und im Abstand F1 ein Bild AS' der Pupille AS erzeugt. In Verbindung mit einem Umlenkelement, hier dem Prisma 129c, wird ferner zur Seite hin ein weiteres Bild AS' der Pupille AS erzeugt. Die Anordnung entspricht insoweit der Anordnung der Fig. 5. Jedoch ist die Beleuchtungstubuslinse 108c und die Linsenoptik 160c um einen Abstand a gegenüber der optischen Achse A des Objektivs 102c bezogen auf eine gemeinsame optische Achse B der beiden Optiken 108c, 160c zur Seite hin verschoben, und das Anregungslaserlicht wird über das Prisma 129c zentrisch durch die beiden Optiken 160c und 108c, also entlang der optischen Achse B, zugeführt. Die Linsenanordnung 108c, 160c wird also in Bezug auf die TIRF-Laserstrahlung zentrisch betrieben. Wie beim Beispiel der Fig. 5 befindet sich das Lichtleiterende des Anregungslasers bzw. der Fokus des Laserlichts in der konjugierten Pupille AS'. Der Seitenversatz der Linsenanordnung 108c, 160c und die Position des Prismas 129c ist hierzu geeignet aufeinander abgestimmt.

Betreffend die konventionelle Beleuchtung wird die Linsenanordnung 108c, 160c hingegen azentrisch genutzt. Die azentrische Nutzung der Linsenoptik 160c und der Tubuslinse 108c für das konventionelle Licht ist allerdings bei weitem nicht so kritisch wie für das TIRF-Anregungslicht, da das konventionelle Beleuchtungslicht ohnehin in der Tiefe des Objektraums auftreten und ggf. zur Fluoreszenz anregen soll. Insoweit gibt es keine "falschen Winkel" an einer totalreflektierenden Grenzfläche. In Folge der azentrischen Nutzung der Linsenanordnung 108c, 190c ist der Beleuchtungsstrahlengang für die konventionelle Beleuchtung gegenüber der optischen Achse B noch weiter zur Seite hin verschoben (optische Achse C), so dass etwa im Falle einer kritischen Beleuchtung das Austrittsende eines durch den Pfeil 106c symbolisierten Lichtleiters in die Objektebene abgebildet wird.

Der Abstand a zwischen der Objektivachse A und der gemeinsamen Achse B der Linsenanordnung 108c, 160c kann maximal der Hälfte des Durchmessers der Pupille AS des Objektivs 102c entsprechen. Dieser Maximalwert dürfte in der Regel optimal für die TIRF-Einkopplung sein. Man wird aber eventuell auch einen Kompromiss mit einem Seitenversatz a kleiner der Hälfte des Durchmessers der Pupille AS in Erwägung ziehen, um für die konventionelle Beleuchtung eine weniger azentrische Nutzung der Linsenanordnung 108c, 160c und dementsprechend geringere Abbildungsfehler für die konventionelle Beleuchtung vorzusehen.

Betreffend das an der Grenzfläche totalreflektierte Anregungs-Laserlicht ist noch anzumerken, dass dieses azentrisch durch die Linsenanordnung 108, 160c tritt, was aber unkritisch ist. Vorzugsweise fällt das rückreflektierte Anregungslicht entsprechend dem ersten Aspekt der Erfindung definiert auf eine Strahlfallenanordnung, um das Auftreten von Streulicht so weit wie möglich zu vermeiden.

Es ist noch darauf hinzuweisen, dass Varianten, etwa entsprechend Fig. 4, auch bei den Ausführungsformen der Fig. 5 und 6 in Betracht kommen.

Bei den vorstehend behandelten Figuren ist jeweils ein einziger Anregungsstrahlengang für die Einkopplung des TIRF-Anregungslichts in den Objektträger gezeigt, der jeweils von mehreren optischen Komponenten gebildet ist: Gemäß Fig. 3 von den Komponenten 124, 126, 128, 129 und 102; gemäß Fig. 4 von den Komponenten 150a, 102; gemäß Fig. 5 von den Komponenten 129b, 160b, 108b und 102b und gemäß Fig. 6 von den Komponenten 129c, 160c, 108c und 102c. Es können jeweils noch weitere Komponenten dem Strahlengang zugehörig sein, die in den Figuren nicht dargestellt sind. Das Anregungslicht wird in den Strahlengängen durch die den Strahlengang bildenden optischen Komponenten geführt; die Lichtführung ist ansonsten nicht an ein lichtführendes Medium gebunden, wie dies etwa im Falle einer Lichtführung in einem Lichtleiter der Fall ist. Etwa vorgesehene Lichtleiter zur Zufuhr des Anregungslichtes von einer gesondert angeordneten Anregungslichtquelle gehören gemäß der hier gewählten Nomenklatur nicht zum Anregungsstrahlengang; die Anregungsstrahlengänge können dementsprechend auch als Freistrahlungs-Strahlengänge bezeichnet werden, um begrifflich auszudrücken, dass die Lichtführung nicht an ein lichtführendes Medium gebunden ist. Soweit es auf die Art der Lichtführung aber nicht ankommt, kann man durchaus auch eine andere Nomenklatur wählen und etwa vorgesehene Lichtleiter als Teil des jeweils zugeordneten Strahlengangs auffassen.

Für spezielle Untersuchungssituationen bzw. Problemstellungen kann eine TIRF-Anregung bei mehreren verschiedenen Wellenlängen vorgesehen sein, die ggf. einen vergleichsweise großen Wellenlängenabstand aufweisen. Herkömmlich wird bei dieser "Vielfarben-TIRF-Anregung" ein gemeinsamer Lichtleiter für mehrere Wellenlängen verwendet, um ausgehend vom Auskoppelende des für die verschiedenen Wellenlängen gemeinsam genutzten Lichtleiters die verschiedenen Anregungswellenlängen über einen gemeinsamen Anregungsstrahlengang in den Objektträger einzukoppeln. Demgegenüber wird vorgeschlagen, mehrere Anregungsstrahlengänge vorzusehen, die jeweils einen eigenen, nicht an ein lichtführendes Medium gebundenen und gegenüber wenigstens einem anderen Anregungsstrahlengang gesonderten Freistrahlungs-Strahlengangabschnitt aufweisen. Die Anregungsstrahlengänge können völlig gesondert voneinander verlaufen (vgl. Fig. 7) oder teilweise zusammenfallen (vgl. Fig. 8 und 9), wobei im letzteren Falle der "eigene" Freistrahlungs-Strahlengang Abschnitt von einem vom Objektträger fernliegenden Strahlengangabschnitt gebildet ist, über den das Anregungslicht in den jeweiligen Anregungsstrahlengang eingespeist wird, beispielsweise von einer Anregungslichtquelle oder dem Auskoppelende eines das Anregungslicht herführenden Lichtleiters.

Nach dem Erfindungsvorschlag ist es möglich, mehrere, ggf. wellenlängenmäßig weit auseinander liegende Anregungswellenlängen jeweils über einen eigenen Anregungsstrahlengang bzw. Freistrahlungs-Strahlengangabschnitt zuzuführen, entweder direkt von einer Anregungslichtquelle, an den sich der betreffende Anregungsstrahlengang anschließt, oder von einem Auskoppelende eines Lichtleiters, der das Anregungslicht von einer gesondert angeordneten Anregungslichtquelle herführt. Auf die gemeinsame Nutzung eines Lichtleiters für mehrere Anregungswellenlängen kann damit verzichtet werden, insbesondere um Intensitätsverluste oder/und Multimoden aufgrund von nicht optimaler Anpassung des Lichtleiters an eine jeweilige Wellenlänge zu vermeiden. Soweit Anregungswellenlängen benötigt werden, deren Wellenlängenabstand nicht so groß ist und dementsprechend durchaus sinnvoll über einen einzigen, gemeinsamen Lichtleiter zuführbar sind, ist es im Rahmen der Erfindung selbstverständlich nicht ausgeschlossen, derartige Anregungswellenlängen über einen gemeinsamen Lichtleiter und einen gemeinsamen, diesem Lichtleiter zugeordneten Anregungsstrahlengang zuzuführen.

Fig. 7 zeigt schematisch eine Ansicht entlang einer optischen Achse eines Beispiels einer erfindungsgemäßen Objektuntersuchungseinrichtung in Richtung zum Objektträger bzw. in Richtung zu einer die TIRF-Einkopplung in den Objektträger vermittelnden Optik, etwa entlang der optischen Achse A der Fig. 5 in Richtung zum Objektiv 102b. Es sind mehrere gesonderte Anregungsstrahlengänge samt einem jeweils vorgeschalteten optischen Lichtleiter vorgesehen, um mehrere Anregungswellenlängen gesondert voneinander einkoppeln zu können. Beim Ausführungsbeispiel der Fig. 7 sind speziell zwei voneinander gesonderte Anregungsstrahlengänge vorhanden, die jeweils durch ein Prisma 129d-1 bzw. 129d-2 repräsentiert sind, das von einem jeweils zugeordneten Lichtleiter (durch den Pfeil 122d-1 bzw. den Pfeil 122d-2 repräsentiert) das Anregungslicht empfängt und in Richtung zum Objektiv umlenkt. Im Falle einer Anordnung entsprechend Fig. 5 wird das jeweilige Anregungslicht über das Prisma 129d-1 bzw. 129d-2 in den Beleuchtungsstrahlengang für die konventionelle Beleuchtung eingekoppelt.

Die Prismen 129d-1 und 129d-2 (alternativ könnten auch sonstige Umlenkelemente, etwa Spiegel, vorgesehen sein) liegen auf einem schraffiert dargestellten Kreisring 170d, der einen Radialbereich bzw. Winkelbereich repräsentiert, für den die TIRF-Bedingung optimal erfüllt ist, d. h., dass Anregungsstrahlenbündel, die durch den schraffierten Bereich 170d gehen, optimal an der Grenzfläche des Objektträgers totalreflektiert werden. Wie aus Fig. 7 erkennbar, könnte im Prinzip eine große Anzahl von in Umfangsrichtung gegeneinander versetzten Anregungsstrahlengängen vorgesehen sein.

Im Falle, dass - wie hier angenommen - die Pfeile 122d-1 und 122d-2 die Auskoppelenden von Lichtleitern repräsentieren, so liegt es auf der Linie des Erfindungsvorschlags, diese Lichtleiter optimal angepasst an die jeweilige Anregungswellenlänge auszuwählen, um Intensitätsverluste oder/und Multimoden zu vermeiden.

Fig. 8 zeigt eine Ausführungsvariante, bei der zwei Anregungsstrahlengänge teilweise zusammenfallen. Über ein Zusammenführelement, beispielsweise einen dichroitischen Spiegel 172e, wird das von zwei Lichtleitern 122e-1 und 122e-2 stammende Anregungslicht zusammengeführt und dann über ein gemeinsames Prisma 129e (allgemein über ein gemeinsames Umlenkelement, etwa alternativ über einen Umlenkspiegel) in Richtung zum Objektträger zugeführt, vorliegend - wie entsprechend Fig. 7 - in einen Beleuchtungsstrahlengang für eine konventionelle Beleuchtung eingekoppelt. Die beiden Anregungsstrahlengänge fallen also beginnend ab dem Zusammenführelement 172e zusammen. Zwischen dem betreffenden Lichtleiter 122e-1 bzw. 122e-2 und dem Zusammenführelement 172e verlaufen die beiden Anregungstrahlengänge hingegen voneinander gesondert, weisen also einen eigenen, gegenüber dem jeweils anderen Anregungsstrahlengang gesonderten Freistrahlungs-Strahlengangabschnitt im Sinne des obigen Erfindungsvorschlags auf. Die optischen Komponenten 126e-1 und 126e-2 können dem optischen Element 126 der Fig. 3 und das optische Element 128e kann dem optischen Element 128 der Fig. 3 entsprechen.

Die Zufuhr mehrerer Anregungswellenlängen über ein gemeinsames Umlenk- bzw. Einkoppelelement (etwa Umlenkspiegel oder Prisma entsprechend dem Prisma 129e) macht es besonders einfach, den anhand der Fig. 6 erläuterten Erfindungsvorschlag auch im Falle einer erfindungsgemäßen "Vielfarben-TIRF-Einkopplung" zu realisieren. Es ist durchaus auch nicht ausgeschlossen, über eine Zusammenführelementanordnung mehr als zwei Anregungswellenlängen zusammen zu führen und dann über einen gemeinsamen Anregungsstrahlengangabschnitt dem Objektträger zuzuführen.

Wie beim Beispiel der Fig. 7 ermöglicht die Anordnung der Fig. 8, Probleme der chromatischen Abhängigkeit bzw. Identitätsverluste von optischen Leitern zu umgehen bzw. auf Lichtleiter gewünschtenfalls sogar zu verzichten und stattdessen das von einer jeweiligen Anregungslichtquelle, etwa Halbleiterlaser, stammende Anregungslicht unmittelbar in den jeweiligen Anregungsstrahlengang einzukoppeln.

Fig. 9 zeigt eine Ausführungsvariante, bei der als Zusammenführelement 172f ein Gitter anstelle eines dichroitischen Spiegels vorgesehen ist. Die von den beiden Fasern 122f-1 und 122f-2 (oder alternativ den beiden Lichtquellen 122f-1 und 122f-2) kommenden Anregungswellenlängen werden über eine entsprechende Winkeleinstellung des Gitters 172f vereinigt und dann über das gemeinsame Prisma 129f der Einkopplung in den Objektträger für die TIRF-Anregung zugeführt. Das Gitter 172f kann auf einem Stellglied (beispielsweise einem Galvanometer) drehbar montiert sein, um je nach Stellung des Gitters eine oder mehrere gewünschte Anregungswellenlängen einzukoppeln. Die Gitter/Stellglied-Anordnung kann damit zugleich als "Schalter" für die einzelnen Anregungswellenlängen verwendet werden. Über das Gitter können durchaus auch mehr als zwei Anregungswellenlängen zusammengeführt werden.

Es sollte noch erwähnt werden, dass auch im Falle einer erfindungsgemäßen "Vielfarben-TIRF-Einkopplung" dem jeweiligen Anregungsstrahlengang bzw. gemeinsamen Anregungsstrahlengangabschnitt ein Abführstrahlengang zugeordnet sein kann, der entsprechend dem Lösungsvorschlag nach dem ersten Aspekt der Erfindung an der Grenzfläche des Objektträgers rückreflektiertes Anregungslicht einer Lichtfallenanordnung zuführt, um Streulicht zu vermeiden.

Auch betreffend die Ausführungsformen der Fig. 7 und 9 kommen diverse Ausführungsvarianten in Betracht, beispielsweise entsprechend Fig. 4 oder Fig. 6.

Noch einmal Bezug nehmend auf Fig. 7 sollte darauf hingewiesen werden, dass die Pfeile 122d-1 und 122d-2 durchaus auch für eine Laserlichtquelle selbst, etwa einen Halbleiterlaser, stehen können. Es kommt durchaus auch in Betracht, dass der eine der Pfeile für einen Lichtleiter und der andere für eine Laserlichtquelle, etwa Halbleiterlaser, steht. Entsprechendes gilt für die Pfeile 122e-1, 122e-2 gemäß Fig. 8 und 122f-1 und 122f-2 gemäß Fig. 9.

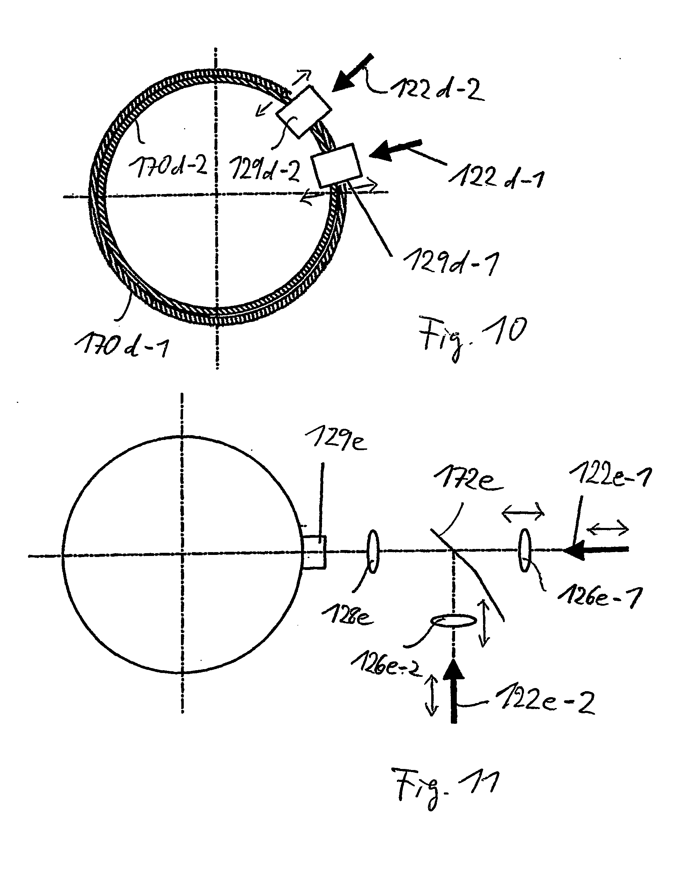

Es ist darauf hinzuweisen, dass chromatische Effekte bei Anregungslicht verschiedener Wellenlänge dafür führen können, dass bei an sich identisch justiertem Anregungsstrahlengang das jeweilige Anregungslicht unter unterschiedlichen Einfallwinkeln auf die Grenzfläche zum optisch dünneren Medium trifft, so dass beispielsweise für das Anregungslicht einer Wellenlänge die gewünschte TIRF-Einkopplung, also eine Einkopplung nur als evaneszente Strahlung, erreicht ist bzw. wird, für Anregungslicht einer anderen Wellenlänge hingegen nicht oder nicht hinreichend. Um für beide Anregungswellenlängen die TIRF-Einkopplung zu erzielen, könnte also eine voneinander abweichende, nach der Erfindung ermöglichte Justage mehrerer Anregungsstrahlengänge erforderlich sein. Dies ist in Fig. 10 schematisch veranschaulicht. Es sind hier zwei Kreisringe 170d-1 und 170d-2 dargestellt, von denen sich der Kreisring 170d-1 auf Anregungslicht einer ersten Anregungswellenlänge und der Ring 170d-2 auf Anregungslicht einer zweiten Anregungswellenläge bezieht und die für die betreffende Anregungswellenlänge jeweils den Radialbereich bzw. Winkelbereich repräsentieren, für den die TIRF-Bedindung unter Berücksichtigung der chromatischen Effekte, bei der gegebenen Anregungswellenlänge, optimal erfüllt ist. Es muss also das Anregungslicht der ersten Anregungswellenlänge durch den Kreisring 170d-1 gehen, um optimal an der Grenzfläche des Objektträgers totalreflektiert zu werden, und es muss also das Anregungslicht der zweiten Anregungswellenlänge durch den Kreisring 170d-2 gehen, um optimal an der Grenzfläche des Objektträger totalreflektiert zu werden.

Eine entsprechende Justage des jeweiligen Anregungsstrahlengangs kann beispielsweise durch Verstellung der Prismen 129d-1 und 129d-2 in radialer Richtung erzielt werden, wie in Fig. 10 durch Doppelpfeile symbolisiert. Man kann auch eingangsseitig der Prismen oder anderer Umlenkelemente vorgesehene optische Komponenten oder die "Lichtausgänge" bzw. Lichtquellen selbst entsprechend justieren, etwa die optischen Elemente 126e-1 und 126e-2 oder die Lichtleiterenden 122e-1 und 122e-2 (oder alternativ eine jeweilige Laserlichtquelle) gemäß Fig. 11. Dies ist in Fig. 11 durch Doppelpfeile symbolisiert. Die Fig. 10 und 11 entsprechen den Fig. 7 und 8 ergänzt um die die Justagemöglichkeiten symbolisierenden Doppelpfeile und, in Fig. 10, einen zweiten Kreisring.

Die Erfindung betrifft eine fluoreszenzbasierte optische Objektuntersuchungseinrichtung, umfassend einen Objektbereich, in dem wenigstens ein zu untersuchendes Objekt auf einem Objektträger plazierbar ist; einen Beobachtungsstrahlengang, der vom Objektbereich zu einem Bildbereich oder Beobachtungsbereich führt; und wenigstens einen Anregungsstrahlengang, der von einer Lichtquelle oder einem Lichtausgang zum Objektbereich führt und über den Anregungslicht derart dem Objektträger zuführbar ist, dass das Anregungslicht auf eine Grenzfläche des Objektträgers unter einem Einfallswinkel zum Einfallslot zur Grenzfläche des Objektträgers trifft, der größer oder gleich dem zum Einfallslot gemessenen Grenzwinkel der Totalreflektion ist, um eine Fluoreszenzanregung im Wege von evaneszenten elektromagnetischen Feldern vorzusehen. Erfindungsgemäß ist vorgesehen, dass mehrere Anregungsstrahlengänge vorgesehen sind, die jeweils einen eigenen, nicht an ein Licht führendes Medium gebundenen und gegenüber wenigstens einem anderen Anregungsstrahlengang gesonderten Freistrahlungs-Strahlengangabschnitt aufweisen. Nach einem Weiterbildungsvorschlag ist ein dem Anregungsstrahlengang zugeordneter Abführstrahlengang vorgesehen, der durch Totalreflektion rückreflektiertes Anregungslicht einer Lichtfallenanordnung zuführt. Nach einem weiteren Weiterbildungsvorschlag ist vorgesehen, eine dem Anregungsstrahlengang und einem Beleuchtungsstrahlengang gemeinsam zugehörige Linsenanordnung, über die sowohl Beleuchtungslicht in eine Optik zur Beleuchtung des Objektbereichs einkoppelbar als auch Anregungslicht in die Optik zur Zufuhr zum Objektträger für die Fluoreszenzanregung einkoppelbar ist, in Bezug auf das Anregungslicht zentrisch zu betreiben.

## Patentansprüche

1. Fluoreszenzbasierte optische Objektuntersuchungseinrichtung, umfassend:
- einen Objektbereich, in dem wenigstens ein zu untersuchendes Objekt (112; 112b; 112c) auf einem Objektträger (110; 110b; 110c) plazierbar ist;
- einen Beobachtungsstrahlengang (130; 130b; 130c), der vom Objektbereich zu einem Bildbereich oder Beobachtungsbereich führt; und
- mehrere Anregungsstrahlengänge, die jeweils von einer Lichtquelle oder einem Lichtausgang (122d-1, 122d-2; 122e-1, 122e-2; 122f-1, 122f-2) zum Objektbereich führen und über die jeweils Anregungslicht derart dem Objektträger zuführbar ist, dass das Anregungslicht auf eine Grenzfläche des Objektträgers unter einem Einfallswinkel zum Einfallslot zur Grenzfläche des Objektträgers trifft, der größer oder gleich dem zum Einfallslot gemessenen Grenzwinkel der Totalreflektion ist, um eine Fluoreszenzanregung im Wege von evaneszenten elektromagnetischen Feldern vorzusehen;
wobei die Anregungsstrahlengänge jeweils einen eigenen, nicht an ein lichtführendes Medium gebundenen und gegenüber wenigstens einem anderen Anregungsstrahlengang gesonderten Freistrahlungs-Strahlengangabschnitt aufweisen.

2. Objektuntersuchungseinrichtung nach Anspruch 1, **dadurch gekennzeichnet, dass** wenigstens einem der Anregungsstrahlengänge ein Abführstrahlengang (120') zugeordnet ist, der vom Objektbereich zu einer Lichtfallenanordnung (140) führt und sich derart im Objektbereich an den Anregungsstrahlengang anschließt, dass durch Totalreflektion an der Grenzfläche reflektiertes Anregungslicht in den Abführstrahlengang eintritt und der Lichtfallenanordnung zugeführt wird.

3. Objektuntersuchungseinrichtung nach Anspruch 2, **dadurch gekennzeichnet, dass** allen Anregungsstrahlengängen ein gemeinsamer oder jeweils ein eigener Abführstrahlengang zugeordnet ist.

4. Objektuntersuchungseinrichtung nach einem der Ansprüche 1 bis 3, **gekennzeichnet durch**:
- wenigstens einen Beleuchtungsstrahlengang (104; 104b; 104c), insbesondere wenigstens einen Auflicht-Beleuchtungsstrahlengang (104; 104b; 104c), über den der Objektbereich ohne wesentliche Totalreflektion am Objektträger mit Beleuchtungslicht beleuchtbar ist und der zumindest abschnittsweise, jedenfalls in einem im Objektbereich endenden Abschnitt, **durch** den Beobachtungsstrahlengang verläuft oder mit diesem zusammenfällt.

5. Objektuntersuchungseinrichtung nach einem der Ansprüche 1 bis 4, **gekennzeichnet durch**:
- eine dem Beobachtungsstrahlengang und - wenn vorgesehen - ggf. dem Beleuchtungsstrahlengang zugehörige, aus dem Objektbereich abbildende Optik, insbesondere ein Mikroskopobjektiv (102; 102b; 102c), **durch** die - wenn vorgesehen - der Beleuchtungsstrahlengang ggf. führt und über die von dem Objektbereich ausgehendes Beobachtungslicht, insbesondere auf einer Fluoreszenzanregung beruhendes Fluoreszenzlicht oder/und auf einer Beleuchtung des Objektbereichs über wenigstens einen Beleuchtungsstrahlengang beruhendes sonstiges Licht, in den Bildbereich oder Beobachtungsbereich abbildbar ist.

6. Objektuntersuchungseinrichtung nach Anspruch 4, **dadurch gekennzeichnet, dass** wenigstens einer der Anregungsstrahlengänge, vorzugsweise alle Anregungsstrahlengänge, durch die Optik (102; 102b; 102c) verläuft/verlaufen.

7. Objektuntersuchungseinrichtung nach Anspruch 5 oder 6, ferner **gekennzeichnet durch**:
- wenigstens eine dem Beleuchtungsstrahlengang und wenigstens einem Anregungsstrahlengang gemeinsam zugehörige Linsenanordnung (160b, 108b; 106c, 108c), über die sowohl Beleuchtungslicht in die Optik (102b; 102c) zur Beleuchtung des Objektbereichs einkoppelbar ist als auch Anregungslicht in die Optik zur Zufuhr zum Objektträger für die Fluoreszenzanregung einkoppelbar ist.

8. Objektuntersuchtungseinrichtung nach Anspruch 7, **dadurch gekennzeichnet, dass** die Linsenanordnung (160c, 108c), eventuell in Kombination mit einer zugeordneten optischen Anordnung, derart betrieben wird oder betreibbar ist, dass einerseits das Beleuchtungslicht azentrisch durch die Linsenanordnung tritt und andererseits das Anregungslicht zentrisch durch die Linsenanordnung tritt.

9. Objektuntersuchungseinrichtung nach einem der Ansprüche 1 bis 8, **dadurch gekennzeichnet, dass** wenigstens ein Beleuchtungsstrahlengang (104; 104b; 104c) vorgesehen ist, über den der Objektbereich ohne wesentliche Totalreflektion am Objektträger mit Beleuchtungslicht beleuchtbar ist.

10. Objektuntersuchtungseinrichtung nach einem der Ansprüche 1 bis 9, **dadurch gekennzeichnet, dass** wenigstens ein Beleuchtungsstrahlengang vorgesehen ist, der als Auflicht-Beleuchtungsstrahlengang (104; 104b; 104c) ausgebildet ist.

11. Objektuntersuchtungseinrichtung nach einem der Ansprüche 1 bis 10, **dadurch gekennzeichnet, dass** wenigstens ein Beleuchtungsstrahlengang vorgesehen ist, der als Durchlicht-Beleuchtungsstrahlengang ausgebildet ist.

12. Objektuntersuchtungseinrichtung nach einem der vorhergehenden Ansprüche 9 bis 11, **dadurch gekennzeichnet, dass** wenigstens ein Beleuchtungsstrahlengang (104; 104b; 104c), insbesondere wenigstens ein Auflicht-Beleuchtungsstrahlengang (104; 104b; 104c), zumindest abschnittsweise, jedenfalls in einem im Objektbereich endenden Abschnitt, durch den Beobachtungsstrahlengang (130; 130b; 130c) verläuft oder mit diesem zusammenfällt.

13. Objektuntersuchungseinrichtung nach einem der Ansprüche 1 bis 12, **dadurch gekennzeichnet, dass** eine dem Beobachtungsstrahlengang zugehörige, aus dem Objektbereich abbildende Optik, insbesondere ein Mikroskopobjektiv (102; 102b; 102c), vorgesehen ist, über die von dem Objektbereich ausgehendes Beobachtungslicht, insbesondere auf einer Fluoreszenzanregung beruhendes Fluoreszenzlicht oder/und auf einer Beleuchtung des Objektbereichs über wenigstens einen Beleuchtungsstrahlengang beruhendes sonstiges Licht, in den Bildbereich oder Beobachtungsbereich (134) abbildbar ist.

14. Objektuntersuchungseinrichtung nach Anspruch 12 und Anspruch 13, **dadurch gekennzeichnet, dass** der Beleuchtungsstrahlengang durch die Optik (102; 102b; 102c) führt.

15. Objektuntersuchtungseinrichtung nach einem der Ansprüche 1 bis 14, **dadurch gekennzeichnet, dass** der Anregungsstrahlengang oder/und - im Falle einer direkten oder indirekten Rückbeziehung auf Anspruch 2 - der diesem zugeordnete Abführstrahlengang zumindest abschnittsweise, jedenfalls in einem im Objektbereich endenden und auf die Grenzfläche treffenden Abschnitt, durch den Beobachtungsstrahlengang (130; 130b; 130c) verläuft oder mit diesem zusammenfällt.

16. Objektuntersuchungseinrichtung nach Anspruch 13 und nach Anspruch 15, **dadurch gekennzeichnet, dass** der Anregungsstrahlengang oder/und - im Falle einer direkten oder indirekten Rückbeziehung auf Anspruch 2 - der diesem zugeordnete Abführstrahlengang durch die Optik (102; 102b; 102c) führt.

17. Objektuntersuchungseinrichtung nach einem der vorhergehenden Ansprüche, **dadurch gekennzeichnet, dass** der Beobachtungsstrahlengang (130; 130b; 130c) als Mikroskopstrahlengang ausgeführt ist.

18. Objektuntersuchungseinrichtung nach einem der vorhergehenden Ansprüche, jedenfalls direkt oder indirekt rückbezogen auf Anspruch 5 oder 13, **dadurch gekennzeichnet, dass** der Beobachtungsstrahlengang (130; 130b; 130c) zumindest abschnittsweise im Wesentlichen gleichachsig zur Optik (102; 102b; 102c) verläuft.

19. Objektuntersuchungseinrichtung nach einem der vorhergehenden Ansprüche, jedenfalls direkt oder indirekt rückbezogen auf Anspruch 5 oder 13, **dadurch gekennzeichnet, dass** der Beobachtungsstrahlengang (130; 130b; 130c) geknickt verläuft und einen vorzugsweise zur Optik (102; 102b; 102c) im Wesentlichen gleichachsigen ersten Abschnitt und einen unter einem Winkel hierzu verlaufenden, mittels eines optischen Umlenkelements (136; 136b; 136c) am ersten Abschnitt angeschlossenen zweiten Abschnitt aufweist.

20. Objektuntersuchungseinrichtung nach einem der vorhergehenden Ansprüche, jedenfalls direkt oder indirekt rückbezogen auf Anspruch 5 oder 13, **dadurch gekennzeichnet, dass** der Beleuchtungsstrahlengang (104; 104b; 104c), insbesondere Auflicht-Beleuchtungsstrahlengang (104; 104b; 104c), zumindest abschnittsweise im Wesentlichen gleichachsig oder im Wesentlichen parallelachsig zur Optik (102; 102b; 102c) verläuft.

21. Objektuntersuchungseinrichtung nach einem der vorhergehenden Ansprüche, jedenfalls direkt oder indirekt rückbezogen auf Anspruch 5 oder 13, **dadurch gekennzeichnet, dass** der Anregungsstrahlengang zumindest abschnittsweise im Wesentlichen gleichachsig oder im Wesentlichen parallelachsig zur Optik (102; 102b; 102c) verläuft.

22. Objektuntersuchtungseinrichtung nach einem der vorhergehenden Ansprüche, jedenfalls direkt oder indirekt rückbezogen auf Anspruch 5 oder 13, **dadurch gekennzeichnet, dass** vom Beleuchtungsstrahlengang (104; 104a; 104b; 104c) und Anregungsstrahlengang wenigstens einer geknicktverläuft und einen vorzugsweise zur Optik (102; 102b; 102c) im Wesentlichen gleichachsigen oder im Wesentlichen parallelachsigen ersten Abschnitt und einen unter einem Winkel hierzu verlaufenden, mittels eines optischen Umlenkelements (129; 150a; 129b; 129c) am ersten Abschnitt angeschlossenen zweiten Abschnitt aufweist.

23. Objektuntersuchtungseinrichtung nach Anspruch 22, **dadurch gekennzeichnet, dass** nur einer der Strahlengänge geknickt und der andere Strahlengang im Wesentlichen gradlinig verläuft.

24. Objektuntersuchtungseinrichtung nach Anspruch 22 oder 23, **dadurch gekennzeichnet, dass** der Anregungsstrahlengang geknickt verläuft.

25. Objektuntersuchtungeinrichtung nach einem der Ansprüche 22 bis 24, **dadurch gekennzeichnet, dass** der Beleuchtungsstrahlengang (104a) geknickt verläuft.

26. Objektuntersuchungseinrichtung nach einem der vorhergehenden Ansprüche, jedenfalls direkt oder indirekt rückbezogen auf 5 oder 13, **dadurch gekennzeichnet, dass** der Abführstrahlengang (120') zumindest abschnittsweise im Wesentlichen gleichachsig oder im Wesentlichen parallelachsig zur Optik (102; 102b; 102c) verläuft.

27. Objektuntersuchungseinrichtung nach einem der vorhergehenden Ansprüche, jedenfalls direkt oder indirekt rückbezogen auf Anspruch 2 sowie jedenfalls direkt oder indirekt rückbezogen auf 5 oder 13, **dadurch gekennzeichnet, dass** der Abführstrahlengang geknickt verläuft und einen vorzugsweise zur Optik (102; 102b; 102c) im Wesentlichen gleichachsigen oder im Wesentlichen parallelachsigen ersten Abschnitt und einen unter einem Winkel hierzu verlaufenden, mittels eines optischen Umlenkelements (138) am ersten Abschnitt angeschlossenen zweiten Abschnitt aufweist.

28. Objektuntersuchungseinrichtung nach einem der vorhergehenden Ansprüche, **dadurch gekennzeichnet, dass** dem Anregungsstrahlengang wenigstens eine im Wesentlichen kohärentes oder/und im Wesentlichen paralleles Anregungslicht abgebende Anregungslichtquelle, insbesondere wenigstens eine Laserlichtquelle (122), zugeordnet ist, und der Anregungsstrahlengang derart ausgeführt ist, dass das Anregungslicht vor Erreichen des Objektträgers in wenigstens eine Zwischenebene (AS, AS') fokussiert wird.

29. Objektuntersuchtungseinrichtung nach Anspruch 28, jedenfalls direkt oder indirekt rückbezogen auf Anspruch 5 oder 13, **dadurch gekennzeichnet, dass** das Anregungslicht in eine Fokusebene oder Pupillenebene (AS) der Optik fokussiert wird.

30. Objektuntersuchungseinrichtung nach Anspruch 29, **dadurch gekennzeichnet, dass** das Anregungslicht in die Pupillenebene (AS) der Optik fokussiert wird, vorzugsweise im Wege einer vorausgehenden Fokussierung des Anregungslichts in wenigstens eine zur Pupillenebene der Optik konjugierte Pupillenebene (AS').

31. Objektuntersuchungseinrichtung nach einem der vorhergehenden Ansprüche, **dadurch gekennzeichnet, dass** der Objektbereich über wenigstens einen Beleuchtungsstrahlengang (104; 104b; 104c), insbesondere Auflicht-Beleuchtungsstrahlengang (104; 104b; 104c), mit Beleuchtungslicht von einer zugeordneten Lichtquelle oder einem zugeordneten Lichtausgang (106; 106b; 106c) beleuchtbar ist, das zur Fluoreszenzanregung über einen gegenüber dem Tiefenwirkungsbereich der evaneszenten elektromagnetischen Felder deutlich größeren Tiefenbereich des Objektbereich dient.

32. Objektuntersuchungseinrichtung nach einem der vorhergehenden Ansprüche, **dadurch gekennzeichnet, dass** der Objektbereich über wenigstens einen Beleuchtungsstrahlengang (104; 104b; 104c), insbesondere Auflicht-Beleuchtungsstrahlengang (104; 104b; 104c), mit Beleuchtungslicht von einer zugeordneten Lichtquelle oder einem zugeordneten Lichtausgang (106; 106b; 106c) beleuchtbar ist, um über den Beobachtungsstrahlengang ein Beleuchtungslicht-Bild in den Bildbereich oder Beobachtungsbereich abzubilden.

33. Objektuntersuchungseinrichtung nach einem der vorhergehenden Ansprüche, jedenfalls direkt oder indirekt rückbezogen auf Anspruch 2 sowie jedenfalls direkt oder indirekt rückbezogen auf Anspruch 5 oder 13, **dadurch gekennzeichnet, dass** der Anregungsstrahlengang oder/und der Abführstrahlengang durch wenigstens eine Linse oder Linsenanordnung, insbesondere wenigstens eine Linse oder Linsenanordnung im Sinne einer Tubuslinse des/eines Beleuchtungsstrahlengangs, insbesondere Auflicht-Beleuchtungsstrahlengangs, verläuft.

34. Objektuntersuchungseinrichtung nach einem der vorhergehenden Ansprüche 1 bis 32, jedenfalls direkt oder indirekt rückbezogen auf Anspruch 2, dass ein/der Beleuchtungsstrahlengang, insbesondere Auflicht-Beleuchtungsstrahlengang wenigstens eine Linse (108) oder Linsenanordnung im Sinne einer Tubuslinse aufweist und weder der Anregungsstrahlengang noch der Abführstrahlengang durch diese Linse oder Linsenanordnung verläuft.

35. Objektuntersuchungseinrichtung nach einem der vorhergehenden Ansprüche, jegenfalls direkt oder indirekt rückbezogen auf Anspruch 8, **dadurch gekennzeichnet, dass** eine zentrisch zur Linsenanordnung (160c, 108c) verlaufende optische Achse (B) der Linsenanordnung gegenüber einer zentrisch zur Optik (102c) verlaufenden optischen Achse (A) der Optik seitlich versetzt ist, wobei die beiden optischen Achsen vorzugsweise im Wesentlichen zueinander parallel verlaufen.

36. Objektuntersuchungseinrichtung nach Anspruch 35, **dadurch gekennzeichnet, dass** der Seitenversatz (a) der beiden Achsen (A, B) kleiner oder gleich dem halben Durchmesser einer Eintrittspupille (AS) der Optik (102c) ist, vorzugsweise etwa gleich dem halben Durchmesser der Eintrittspupille ist.

37. Objektuntersuchungseinrichtung nach einem der vorhergehenden Ansprüche jedenfalls direkt oder indirekt rückbezogen auf Anspruch 7, **dadurch gekennzeichnet, dass** die Linsenanordnung eine der Optik (102c) nähere erste Linse (108c) oder erste Linsen-Teilanordnung, insbesondere im Sinne einer Tubuslinse, sowie eine von der Optik weiter entfernt liegende zweite Linse (160c) oder zweite Linsen-Teilanordnung umfasst.

38. Objektuntersuchtungseinrichung nach einem der vorhergehenden Ansprüche, jedenfalls direkt oder indirekt rückbezogen auf Anspruch 7, **dadurch gekennzeichnet, dass** das Beleuchtungslicht der Linsenanordnung (160c, 108c) über eine weitere Linse (162c) oder Linsenanordnung zuführbar ist, wobei das Beleuchtungslicht vorzugsweise zentrisch durch die weitere Linse oder Linsenanordnung tritt.

39. Objektuntersuchungseinrichtung nach Anspruch 38, **dadurch gekennzeichnet, dass** eine zentrisch zur weiteren Linse (162c) oder Linsenanordnung verlaufende optische Achse (C) gegenüber der optischen Achse (B) der Linsenanordnung (160c, 108c) um einen ersten Versatzwert und gegenüber der optischen Achse (A) der Optik (102c) um einen den ersten Versatzwert übersteigenden zweiten Versatzwert seitlich versetzt ist und vorzugsweise zu wenigstens einer dieser optischen Achsen parallel verläuft.

40. Objektuntersuchungseinrichtung nach einem der vorhergehenden Ansprüche, **dadurch gekennzeichnet, dass** die Anregungsstrahlengänge insgesamt als nicht an ein lichtführendes Medium gebundene Freistrahlungs-Strahlengänge ausgeführt sind.

41. Objektuntersuchungseinrichtung nach einem der vorhergehenden Ansprüche, **dadurch gekennzeichnet, dass** die Freistrahlungs-Strahlengangabschnitte mehrerer Anregungsstrahlengänge von einem jeweiligen Lichtausgang oder einer jeweiligen Lichtquelle (122e-1, 122e-2; 122f-1, 122f-2) ausgehend gesondert voneinander verlaufen und dann in einen in Richtung zum Objektbereich führenden gemeinsamen Freistrahlungs-Strahlengangabschnitt übergehen.

42. Objektuntersuchungseinrichtung nach Anspruch 41, **dadurch gekennzeichnet, dass** der gemeinsame Freistrahlungs-Strahlengangabschnitt, der ggf. durch die aus dem Objektbereich abbildende Optik führt, durch den Objektbereich geht oder in diesem endet.

43. Objektuntersuchungseinrichtung nach Anspruch 41 oder 42, **dadurch gekennzeichnet, dass** wenigstens ein die Freistrahlungs-Strahlengangabschnitte zum gemeinsamen Freistrahlungs-Strahlengangabschnitt zusammenführendes Zusammenführelement (172e; 172f) vorgesehen ist.

44. Objektuntersuchungseinrichtung nach Anspruch 43, **dadurch gekennzeichnet, dass** das Zusammenführelement (172e; 172f) Umlenkeigenschaften in Bezug auf wenigstens einen der Freistrahlungs-Strahlengangabschnitte oder/und Wellenlängenselektionseigenschaften in Bezug auf über wenigstens einen der Freistrahlungs-Strahlengangabschnitte zugeführtes Anregungslicht aufweist.

45. Objektuntersuchungseinrichtung nach einem der vorhergehenden Ansprüchen, **dadurch gekennzeichnet, dass** die Freistrahlungs-Strahlengangabschnitte mehrere Anregungsstrahlengänge jeweils von einem zugeordneten Lichtausgang oder einer zugeordneten Lichtquelle (122d-1, 122d-2) ausgehend gesondert verlaufen und in Richtung zum Objektbereich führen, ohne zusammengeführt zu werden.

46. Objektuntersuchungseinrichtung nach Anspruch 45, **dadurch gekennzeichnet, dass** die gesondert verlaufenden Freistrahlungs-Strahlengangabschnitte, die ggf. durch die aus dem Objektbereich abbildende Optik führen, jeweils durch den Objektbereich gehen oder in diesem enden.

47. Objektuntersuchungseinrichtung nach Anspruch 45 oder 46, **dadurch gekennzeichnet, dass** die Anregungsstrahlengänge gesondert voneinander verlaufen.

48. Objektuntersuchungseinrichtung nach Anspruch 54, 55 oder 56, **dadurch gekennzeichnet, dass** die Freistrahlungs-Strahlengangabschnitte jeweils einen sich längs einer Zufuhrachse, vorzugsweise parallel zu der Zufuhrachse erstreckenden Abschnitt aufweisen, und dass diese sich längs der bzw. parallel zur Zufuhrachse erstreckenden Abschnitte um die Achse winkelmäßig gegeneinander versetzt sind (Fig. 7).

49. Objektuntersuchungseinrichtung nach Anspruch 48, **dadurch gekennzeichnet, dass** die sich längs der bzw. parallel zur Zufuhrachse erstreckenden Abschnitte einen zur Zufuhrachse konzentrischen virtuellen Kreisring (170d) schneiden.

50. Objektuntersuchungeinrichtung nach Anspruch 48 oder 49, jedenfalls direkt oder indirekt rückbezogen auf Anspruch 4, 7, 5 oder 15, **dadurch gekennzeichnet, dass** eine/die zur Optik (102; 102b; 102c) zentrisch verlaufende optische Achse (A) der Optik die Zufuhrachse bildet.

51. Objektuntersuchungseinrichtung nach einem der vorhergehenden Ansprüche, **dadurch gekennzeichnet, dass** den Anregungsstrahlengängen Lichtquellen, insbesondere Laserlichtquellen, verschiedener Anregungswellenlänge zugeordnet sind, die über einen jeweiligen Lichtleiter, insbesondere Lichtleiterfaser oder Lichtleiterfaserbündel, am jeweiligen Anregungsstrahlengang bzw. am jeweiligen Freistrahlungs-Strahlengangabschnitt angeschlossen sind.

52. Objektuntersuchungseinrichtung nach einem der vorhergehenden Ansprüche, **dadurch gekennzeichnet, dass** den Anregungsstrahlengängen Lichtquellen, insbesondere Laserlichtquellen, verschiedener Anregungswellenlänge zugeordnet sind, von denen der jeweilige Anregungsstrahlengang bzw. der jeweilige Freistrahlungs-Strahlengangabschnitt ausgeht oder die über einen jeweiligen Lichtleiter, insbesondere Lichtleiterfaser oder Lichtleiterfaserbündel, am jeweiligen Anregungsstrahlengang bzw. am jeweiligen Freistrahlungs-Strahlengangabschnitt angeschlossen sind.

53. Objektuntersuchtungseinrichtung nach Anspruch 51 oder 52, **dadurch gekennzeichnet, dass** die Lichtleiter für die jeweils zu führende Anregungswellenlänge oder Anregungswellenlängen als Monomodefaser ausgeführt sind.

54. Objektuntersuchungseinrichtung nach Anspruch 51, 52 oder 53, **dadurch gekennzeichnet, dass** die Lichtleiter an die jeweils zu führende Anregungswellenlänge oder Anregungswellenlängen im Hinblick auf eine Minimierung von Intensitätsverlusten angepasst sind.

55. Objektuntersuchungseinrichtung nach einem der vorhergehenden Ansprüche, **dadurch gekennzeichnet, dass** zumindest einige der Anregungsstrahlengänge unabhängig voneinander in Bezug auf eine Einstellung des Einfallswinkels des jeweiligen Anregungslichts justierbar sind.

56. Objektuntersuchungseinrichtung nach einem der vorhergehenden Ansprüche, **gekennzeichnet durch** ein wenigstens den Objektbereich, den Beobachtungsstrahlengang und - wenn vorgesehen - wenigstens einen Beleuchtungsstrahlengang aufweisendes Mikroskop (100).

57. Objektuntersuchungseinrichtung - nach Anspruch 56, **dadurch gekennzeichnet, dass** das Mikroskop als Aufrecht-Mikroskop oder - vorzugsweise - als Invers-Mikroskop (100) ausgeführt ist.

58. Objektuntersuchungseinrichtung nach Anspruch 56 oder 57,
**dadurch gekennzeichnet, dass** das Mikroskop als über den Beobachtungsstrahlengang optisch ein Bild in den Bildbereich oder Beobachtungsbereich abbildendes Abbildungsmikroskop (100) ausgeführt ist.

59. Objektuntersuchungseinrichtung nach einem der vorhergehenden Ansprüche, **dadurch gekennzeichnet, dass** sie eine wenigstens den Objektbereich, den Beobachtungsstrahlengang und den Anregungsstrahlengang aufweisende, ggf. das Mikroskop (100) umfassende Fluoreszenz-Messvorrichtung (100) umfasst.

## Claims

1. Optical fluorescence-based device for analysing objects comprising:
- an object zone, in which at least one object (112; 112b; 112c) to be analysed can be placed on an object carrier (110; 110b; 110c);
- an observation beam path (130; 130b; 130c), which runs from the object zone to an image zone or observation zone; and
- several excitation beam paths, which run respectively from a light source or a light output (122d-1, 122d-2; 122e-1, 122e-2; 122f-1, 122f-2) to the object zone and by means of which excitation light can be supplied to the object carrier ,such that the excitation light meets an interface of the object carrier at an angle of incidence to the normal at the point of incidence relative to the interface of the object carrier, which is greater than or equal to the critical angle of total reflection measured relative to the normal at the point of incidence, in order to provide a fluorescence excitation in the path of evanescent electromagnetic fields;
whereby the excitation beam paths each comprise a general diffuse beam path section not connected to a light-guiding medium and separate from at least one other excitation beam path.

2. Object analysing device according to claim 1, **characterised in that** a dissipating beam path (120') is assigned to at least one of the excitation beam paths, leading from the object zone to a light trap arrangement (140), and thus in the object zone joins the excitation beam path, such that by total reflection at the interface reflected excitation light enters the dissipating beam path and is supplied to the light trap arrangement.

3. Object analysing device according to claim 2, **characterised in that** a common or respectively an individual dissipating beam path is assigned to all excitation beam paths.

4. Object analysing device according to one of claims 1 to 3, **characterised by**:
- at least one illuminating beam path (104; 104b; 104c), in particular at least one incident light illuminating beam path (104; 104b; 104c), by means of which the object zone can be illuminated with illumination light without substantial total reflection on the object carrier, and which runs, at least in sections, in particular in a section ending in the object zone, through the observation beam path or coincides with the latter.

5. Object analysing device according to one of claims 1 to 4, **characterised by**:
- an optical system, in particular a microscope objective (102; 102b; 102c), which is associated with the observation beam path and - if provided - possibly the illuminating beam path, and displays images from the object zone, through which optical system - if provided - the illuminating beam path possibly runs, and by means of which observation light coming from the object zone, in particular fluorescent light based on a fluorescence excitation and/or other light based on an illumination of the object zone by at least one illuminating beam path, can be displayed in the image zone or observation zone.

6. Object analysing device according to claim 4, **characterised in that** at least one of the excitation beam paths, preferably all of the excitation beam paths runs/run through the optical system (102; 102b; 102c).

7. Object analysing device according to claim 5 or 6, further **characterised by**:
- at least one lens arrangement (160b, 108b; 106c, 108c) belonging jointly to the illuminating beam path and at least one excitation beam path, via which the illuminating light can be coupled into the optical system (102b; 102c) for illuminating the object zone and excitation light can be coupled into the optical system to be fed to the object carrier for the fluorescence excitation.

8. Object analysing device according to claim 7, **characterised in that** the lens arrangement (160c, 108c) is operated or can be operated, possibly in combination with an associated optical arrangement, such that, on the one hand, the illuminating light passes acentrically through the lens arrangement and, on the other hand, the excitation light passes centrally through the lens arrangement.

9. Object analysing device according to one of claims 1 to 8, **characterised in that** at least one illuminating beam path (104; 104b; 104c) is provided, by means of which the object zone can be illuminated with illuminating light without substantial total reflection on the object carrier.

10. Object analysing device according to one of claims 1 to 9, **characterised in that** at least one illuminating beam path is provided, which is in the form of an incident light illuminating beam path (104; 104b; 104c).

11. Object analysing device according to one of claims 1 to 10, **characterised in that** at least one illuminating beam path is provided which is in the form of a transmitted light illuminating beam path.

12. Object analysing device according to one of the preceding claims 9 to 11, **characterised in that** at least one illuminating beam path (104; 104b; 104c), in particular at least one incident light illuminating beam path (104; 104b; 104c), runs, at least in sections, in particular in a section ending in the object zone, through the observation beam path (130; 130b; 130c) or coincides with the latter.

13. Object analysing device according to one of claims 1 to 12, **characterised in that** an optical system, in particular a microscope objective (102; 102b; 102c), associated with the observation beam path is provided displaying images from the object zone, by means of which observation light coming from the object zone, in particular fluorescent light based on fluorescence excitation and/or other light based on an illumination of the object zone by at least one illumination beam path, can be displayed in the image zone or observation zone (134).

14. Object analysing device according to claim 12 and claim 13, **characterised in that** the illuminating beam path runs through the optical system (102; 102b, 102c),

15. Object analysing device according to one of claims 1 to 14, **characterised in that** the excitation beam path and/or - in the case of a direct or indirect reference back to claim 2 - the dissipating beam path associated therewith runs at least in sections, particularly in a section ending in the object zone and meeting the interface, through the observation beam path (130; 130b; 130c) or coincides with the latter.

16. Object analysing device according to claim 13 and according to claim 15, **characterised in that** the excitation beam path and/or - in case of a direct or indirect reference back to claim 2 - the dissipating beam path associated therewith runs through the optical system (102; 102b; 102c).

17. Object analysing device according to one of the preceding claims, **characterised in that** the observation beam path (130; 130b 130c) is in the form of a microscope beam path.

18. Object analysing device according to one of the preceding claims, referring back directly or indirectly to claim 5 or 13, **characterised in that** the observation beam path (130; 130b; 130c) runs at least in sections substantially in the same axis as the optical system (102; 102b; 102c).

19. Object analysing device according to one of the preceding claims, referring back directly or indirectly to claim 5 or 13, **characterised in that** the observation beam path (130; 130b; 130c) runs in a bent line and has a first section that is substantially in the same axis as the optical system (102; 102b; 102c) and a second section at an angle thereto associated with the first section by means of an optical deflecting element (136; 136b; 136c).

20. Object analysing device according to one of the preceding claims, referring back directly or indirectly to claim 5 or 13, **characterised in that** the illuminating beam path (104; 104b; 104c), in particular the incident light illuminating beam path (104; 104b; 104c), runs at least in sections substantially in the same axis or in a parallel axis to the optical system (102; 102b; 102c).

21. Object analysing device according to one of the preceding claims, referring back directly or indirectly to claim 5 or 13, **characterised in that** the excitation beam path runs, at least in sections, substantially in the same axis or substantially parallel to the optical system (102; 102b; 102c).

22. Object analysing device according to one of the preceding claims, referring back directly or indirectly to claim 5 or 13, **characterised in that** at least either the illuminating beam path (104; 104a; 104b; 104c) or excitation beam path runs in a bent line and comprises a first section substantially in the same axis or in a parallel axis to the optical system (102; 102b; 102c) and a second section running at an angle thereto associated by means of an optical deflecting element (129; 150a; 129b; 129c) to the first section.

23. Object analysing device according claim 22, **characterised in that** only one of the beam paths runs in a bent line and the other beam path runs substantially in a straight line.

24. Object analysing device according claim 22 or 23, **characterised in that** the excitation beam path runs in a bent line.

25. Object analysing device according to one of claims 22 to 24, **characterised in that** the illuminating beam path (104a) runs in a bent line.

26. Object analysing device according to one of the preceding claims, referring back directly or indirectly to claim 5 or 13, **characterised in that** the dissipating beam path (120') runs, at least in sections, substantially in the same axis or substantially in parallel to the optical system (102; 102b; 102c).

27. Object analysing device according to one of the preceding claims, referring back directly or indirectly to claim 2 and referring back directly or indirectly to claim 5 or 13, **characterised in that** the dissipating beam path runs in a bent line and comprises a first section preferably in the same axis or in parallel to the optical system (102; 102b; 102c) and a second section running at an angle thereto and associated by means of an optical deflecting element (138) to the first section.

28. Object analysing device according to one of the preceding claims, **characterised in that** at least one excitation light source emitting excitation light that is substantially coherent and/or substantially parallel, in particular at least one laser light source (122), is assigned to the excitation beam path, and the excitation beam path is configured such that the excitation light is focussed before reaching the object carrier in at least one intermediate plane (AS, AS').

29. Object analysing device according to claim 28, referring back directly or indirectly to claim 5 or 13, **characterised in that** the excitation light is focussed in a focus plane or pupil plane (AS) of the optical system.

30. Object analysing device according to claim 29, **characterised in that** the excitation light is focussed in the pupil place (AS) of the optical system, preferably in the path of a preceding focussing of the excitation light in at least one pupil plane (AS') conjugate to the pupil plane of the optical system.

31. Object analysing device according to one of the preceding claims, **characterised in that** the object zone can be illuminated by at least one illuminating beam path (104; 104b; 104c), in particular an incident light illuminating beam path (104; 104b; 104c), with illuminating light from an assigned light source or an assigned light output (106; 106b; 106c), which illuminating light is used for fluorescence excitation over a much greater depth range of the object zone than the effective depth range of the evanescent electromagnetic fields.

32. Object analysing device according to one of the preceding claims, **characterised in that** the object zone can be illuminated by at least one illuminating beam path (104; 104b; 104c), in particular an incident light illuminating beam path (104; 104b; 104c), with illuminating light from an associated light source or an associated light output (106; 106b; 106c), in order to display by means of the observation beam path an illuminating light image in the image zone or observation zone.

33. Object analysing device according to one of the preceding claims, referring back directly or indirectly to claim 2 and referring back directly or indirectly to claim 5 or 13, **characterised in that** the excitation beam path and/or the dissipation beam path runs through at least one lens or lens arrangement, in particular at least one lens or lens arrangement within the meaning of a tube lens of the/ an illuminating beam path, in particular an incident light illuminating beam path.

34. Object analysing device according to one of the preceding claims 1 -33, referring back directly or indirectly to claim 2, **characterised in that** an/the illuminating beam path, in particular the incident light illuminating beam path, comprises at least one lens (108) or lens arrangement within the meaning of a tube lens, and neither the excitation beam path nor the dissipating beam path runs through said lens or lens arrangement.

35. Object analysing device according to one of the preceding claims, referring back directly or indirectly to claim 8, **characterised in that** an optical axis (B) of the lens arrangement running centrally to the lens arrangement (160c, 108c) is offset laterally relative to an optical axis (A) of the optical system running centrally to the optical system (102c), whereby the two optical axes preferably run substantially parallel to one another.

36. Object analysing device according to claim 35, **characterised in that** the lateral offset (a) of the two axes (A, B) is smaller than or equal to half the diameter of an entrance pupil (AS) of the optical system (102c), preferably about equal to half the diameter of the entrance pupil.

37. Object analysing device according to one of the preceding claims, referring back directly or indirectly to claim 7, **characterised in that** the lens arrangement comprises a first lens (1 08c) closer to the optical system (102c) or a first lens part arrangement, in particular within the meaning of a tube lens, and a second lens (160c) lying further away from the optical system or second lens part arrangement.

38. Object analysing device according to one of the preceding claims, referring back directly or indirectly to claim 7, **characterised in that** the illuminating light of the lens arrangement (160c, 108c) can be supplied via an additional lens (162c) or lens arrangement, whereby the illuminating light preferably strikes centrally through the additional lens or lens arrangement.

39. Object analysing device according to claim 38, **characterised in that** an optical axis (C) running centrally to the additional lens (162c) or lens arrangement relative to the optical axis (B) of the lens arrangement (160c, 108c) is offset laterally by a first offset value and relative to the optical axis (A) of the optical system (102c) about a second offset value exceeding the first offset value and preferably runs parallel to at least one of these optical axes.

40. Object analysing device according to one of the preceding claims, **characterised in that** the excitation beam paths are configured overall as general diffuse beam paths not bound to a light-carrying medium.

41. Object analysing device according to one of the preceding claims, **characterised in that** the general diffuse beam path sections of several excitation beam paths run from a respective light output or a respective light source (122e-1, 122e-2; 122f-1, 122f-2) separately from one another and then pass into a joint general diffuse beam path section running in the direction of the object zone.

42. Object analysing device according to claim 41, **characterised in that** the joint general diffuse beam path section, which leads possibly through the optical system displaying the object zone, goes through the object zone or ends in the latter.

43. Object analysing device according to claim 41 or 42, **characterised in that** at least one uniting element (172e; 172f) bringing together the general diffuse beam path sections to a joint general diffuse beam path section is provided.

44. Object analysing device according to claim 43, **characterised in that** the uniting element (172e; 172f) comprises deflecting properties in respect of at least one of the general diffuse beam path sections and/or wavelength selection properties in respect of excitation light supplied via at least one of the general diffuse beam path sections.

45. Object analysing device according to one of the preceding claims, **characterised in that** the general diffuse beam path sections of several excitation beam paths run separately respectively from an assigned light output or an assigned light source (122d-1, 122d-2) and run in the direction of the object zone without being joined together.

46. Object analysing device according to claim 45, **characterised in that** the separately running general diffuse beam path sections, which if necessary run through the optical system displaying from the object zone, pass through the object zone or end in the latter.

47. Object analysing device according to claim 45 or 46, **characterised in that** the excitation beam paths run separately from one another.

48. Object analysing device according to claim 54, 55 or 56, **characterised in that** the general diffuse beam path sections comprise a section extending along a feed axis, preferably parallel to the feed axis, and **in that** these sections extending along or parallel to the feed axis are offset relative to one another at an angle about the axis (Fig. 7).

49. Object analysing device according to claim 48, **characterised in that** the sections extending along or parallel to the feed axis intersect a virtual circular ring (170d) concentric to the feed axis.

50. Object analysing device according to claim 48 or 49, referring back directly or indirectly to claim 4, 7, 5 or 15, **characterised in that** an/the optical axis (A) of the optical system running centrally to the optical system (102; 102b; 102c) forms the feed axis.

51. Object analysing device according to one of the preceding claims, **characterised in that** light sources, in particular laser light sources, of varying excitation wavelength are assigned to the excitation beam paths, which light sources are joined via a respective fibre-optic conductor, in particular fibre-optics or fibre-optic bundle, to the respective excitation beam path or the respective general diffuse beam path section.

52. Object analysing device according to one of the preceding claims, **characterised in that** light sources, in particular laser light sources of varying excitation wavelength, are assigned to the excitation beam paths, from which light sources the respective excitation beam path or the respective general diffuse beam path section comes or which are joined via a respective fibre-optic conductors, in particular fibre-optics or fibre-optic bundle, to the respective excitation beam path or the respective general diffuse beam path section.

53. Object analysing device according to claim 51 or 52, **characterised in that** the fibre-optic conductors for the excitation wavelength or excitation wavelengths are configured as monomode fibres.

54. Object analysing device according to claim 51, 52 or 53, **characterised in that** the fibre-optic conductors are adjusted to the excitation wavelength or excitation wavelengths with respect to minimising losses in intensity.

55. Object analysing device according to one of the preceding claims, **characterised in that** at least some of the excitation beam paths are adjustable independently of one another in relation to an adjustment of the angle of incidence of the respective excitation light.

56. Object analysing device according to one of the preceding claims, **characterised by** a microscope (100) comprising at least the object zone, the observation beam path and -if provided - at least one illuminating beam path.

57. Object analysing device according to claim 56, **characterised in that** the microscope is in the form of an upright microscope or preferably an inverse microscope (100).

58. Object analysing device according to claim 56 or 57, **characterised in that** the microscope is in the form of an imaging microscope (100) optically displaying over the observation beam path an image in the image zone or observation zone.

59. Object analysing device according to one of the preceding claims, **characterised in that** it comprises a fluorescence measuring device (100) comprising at least the object zone, the observation beam path and the excitation beam path, possibly incorporating the microscope (100).

## Revendications

1. Dispositif optique servant à observer des objets au moyen de la fluorescence, comprenant :
- une zone d'objet dans laquelle au moins un objet à examiner (112 ; 112b ; 112c) peut être placé sur un support d'objet (110 ; 110b ; 110c) ;
- une trajectoire de faisceau d'observation (130 ; 130b ; 130c) qui va de la zone d'objet à une zone d'image ou zone d'observation ; et
- plusieurs trajectoires de faisceaux d'excitation qui vont respectivement d'une source lumineuse ou d'une sortie de lumière (122d-1, 122d-2 ; 122e-1, 122e-2 ; 122f 1, 122f-2) à la zone d'objet et par le biais desquelles la lumière d'excitation peut être respectivement dirigée vers le support de l'objet de telle manière que la lumière d'excitation touche une surface de séparation du support de l'objet sous un angle d'incidence par rapport à l'axe d'incidence à la surface de séparation du support d'objet qui est plus grand ou de même taille que l'angle de séparation mesuré par rapport à l'axe d'incidence de réflexion totale afin de prévoir une excitation fluorescente par voie de champs électromagnétiques évanescents les trajectoires de faisceaux d'excitation présentant respectivement un segment de trajectoire du faisceau d'excitation à rayonnement libre individuel non lié à un milieu conducteur de lumière et séparé par rapport au moins à une autre trajectoire de faisceaux d'excitation.

2. Dispositif optique servant à observer des objets selon la revendication 1, **caractérisé en ce qu'**au moins une trajectoire du faisceau de sortie (120') est associée aux trajectoires des faisceaux d'excitation, cette trajectoire allant de la zone d'objet à un dispositif de piège de lumière (140) et se raccordant dans la zone de l'objet à la trajectoire du faisceau d'excitation de telle manière que la lumière réfléchie pénètre dans la trajectoire des faisceaux de sortie par réflexion totale sur la surface de séparation et est ajoutée au dispositif de piège de lumière.

3. Dispositif optique servant à observer des objets selon la revendication 2, **caractérisé en ce qu'**une trajectoire de faisceaux de sortie commune ou individuelle est associée à toutes les trajectoires de faisceaux d'excitation.

4. Dispositif optique servant à observer des objets selon l'une quelconque des revendications 1 à 3, **caractérisé par** :
au moins une trajectoire du faisceau d'éclairage (104 ; 104b ; 104c), notamment au moins une trajectoire du faisceau d'éclairage incident (104 ; 104b ; 104c), par le biais de laquelle la zone de l'objet peut être éclairée sans réflexion totale sur le support de l'objet avec une lumière d'éclairage et qui traverse au moins par segments, en tous cas dans un segment se terminant dans la zone de l'objet, la trajectoire du faisceau d'observation ou coïncide avec celle-ci.

5. Dispositif optique servant à observer des objets selon l'une quelconque des revendications 1 à 4, **caractérisé par** :
un instrument optique faisant partie de la trajectoire du faisceau d'observation et, le cas échéant, de la trajectoire du faisceau d'éclairage reproduisant à partir de la zone de l'objet, notamment un objectif de microscope (102 ; 102b ; 102c), à travers lequel, le cas échéant, passe la trajectoire du faisceau d'éclairage, celui-ci permettant de reproduire dans la zone de l'image ou dans la zone d'observation la lumière d'observation sortant de la zone de l'objet, notamment sur une lumière fluorescente reposant sur une excitation fluorescente et/ou sur un éclairage de la zone de l'objet par le biais d'au moins une lumière spécifique reposant sur une trajectoire du faisceau d'éclairage.

6. Dispositif optique servant à observer des objets selon la revendication 4, **caractérisé en ce qu'**au moins une des trajectoires de faisceaux d'excitation, de préférence toutes les trajectoires de faisceaux d'excitation, traverse/traversent l'instrument optique (102, 102b ; 102c).

7. Dispositif optique servant à observer des objets selon la revendication 5 ou 6,
**caractérisé en outre par** :
au moins une lentille (160b, 108b ; 106c, 108c), appartenant conjointement à la trajectoire du faisceau d'éclairage et au moins à une trajectoire du faisceau d'excitation, par le biais de laquelle la lumière d'éclairage peut être couplée dans l'instrument optique (102b ; 102c) pour l'éclairage de la zone d'objet tout comme la lumière d'excitation peut être couplée dans l'instrument optique pour l'introduction dans le support de l'objet pour l'excitation fluorescente.

8. Dispositif optique servant à observer des objets selon la revendication 7, **caractérisé en ce que** la lentille (160c, 108c), éventuellement combinée à un dispositif optique associé, est actionné ou peut être actionné de telle manière que d'une part la lumière d'éclairage traverse la lentille de manière acentrique et que d'autre part la lumière d'excitation traverse la lentille de manière centrée.

9. Dispositif optique servant à observer des objets selon l'une quelconque des revendications 1 à 8, **caractérisé en ce qu'**au moins une trajectoire du faisceau d'éclairage (104 ; 104b ; 104c) est prévue, par le biais de laquelle la zone de l'objet peut être éclairée par la lumière d'éclairage sans réflexion totale importante sur le support de l'objet.

10. Dispositif optique servant à observer des objets selon l'une quelconque des revendications 1 à 9, **caractérisé en ce qu'**au moins une trajectoire du faisceau d'éclairage est prévue laquelle est configurée en tant que trajectoire du faisceau d'éclairage incident (104 ; 104b ; 104c).

11. Dispositif optique servant à observer des objets selon l'une quelconque des revendications 1 à 10, **caractérisé en ce qu'**au moins une trajectoire du faisceau d'éclairage est prévue laquelle est configurée en tant que trajectoire du faisceau d'éclairage par transparence.

12. Dispositif optique servant à observer des objets selon l'une quelconque des revendications 9 à 11, **caractérisé en ce qu'**au moins une trajectoire du faisceau d'éclairage (104 ; 104b ; 104c), notamment au moins une trajectoire du faisceau d'éclairage incident (104 ; 104b ; 104c), traverse au moins par segments, en tous cas dans un segment aboutissant à la zone d'objet, la trajectoire du faisceau d'observation (130 ; 130b ; 130c) ou coïncide avec celle-ci.

13. Dispositif optique servant à observer des objets selon l'une quelconque des revendications 1 à 12, **caractérisé en ce qu'**un instrument optique appartenant à la trajectoire du faisceau d'observation, reproduisant à partir de la zone de l'objet, notamment un objectif de microscope (102 ; 102b ; 102c) est prévu, par le biais duquel la lumière d'observation sortant de la zone d'objet, notamment sur une lumière fluorescente reposant sur une excitation fluorescente et/ou sur un éclairage de la zone de l'objet par le biais d'au moins une lumière spécifique reposant sur une trajectoire du faisceau d'éclairage, peut être reproduite dans la zone d'image ou dans la zone d'observation (134).

14. Dispositif optique servant à observer des objets selon la revendication 12 et la revendication 13, **caractérisé en ce que** la trajectoire du faisceau d'éclairage traverse l'instrument optique (102 ; 102b ; 102c).

15. Dispositif optique servant à observer des objets selon l'une quelconque des revendications 1 à 14, **caractérisé en ce que** la trajectoire du faisceau d'excitation et/ou, en cas de référence directe ou indirecte à la revendication 2, la trajectoire du faisceau de sortie associée à celle-ci, traverse la trajectoire du faisceau d'observation (130 ; 130b ; 130c) au moins par segments, en tous cas dans un segment se terminant dans la zone de l'objet et touchant la surface de séparation ou coïncide avec celle-ci.

16. Dispositif optique servant à observer des objets selon la revendication 13 et la revendication 15, **caractérisé en ce** la trajectoire du faisceau d'excitation ou/et, dans le cas d'une référence directe ou indirecte à la revendication 2, la trajectoire du faisceau de sortie associée à celle-ci, passe par l'instrument optique (102 ; 102b ; 102c).

17. Dispositif optique servant à observer des objets selon l'une quelconque des revendications précédentes, **caractérisé en ce que** la trajectoire du faisceau d'observation (130 ; 130b ; 130c) est réalisée en tant que trajectoire du faisceau de microscope.

18. Dispositif optique servant à observer des objets selon l'une quelconque des revendications précédentes, se référant en tous cas directement ou indirectement à la revendication 5 ou 13, **caractérisé en ce que** la trajectoire du faisceau d'observation (130 ; 130b ; 130c) passe au moins par segments essentiellement coaxialement à l'instrument optique (102 ; 102b ; 102c).

19. Dispositif optique servant à observer des objets selon l'une quelconque des revendications précédentes, se référant en tous cas directement ou indirectement à la revendication 5 ou 13, **caractérisé en ce que** la trajectoire du faisceau d'observation (130 ; 130b ; 130c) est infléchie et présente un premier segment de préférence essentiellement coaxialement à l'instrument optique (102 ; 102b ; 102c) et un deuxième segment passant sous un angle, relié au premier segment au moyen d'un élément de déviation optique (136 ; 136b ; 136c).

20. Dispositif optique servant à observer des objets selon l'une quelconque des revendications précédentes, se référant en tous cas directement ou indirectement à la revendication 5 ou 13, **caractérisé en ce que** la trajectoire du faisceau d'éclairage (104 ; 104b ; 104c), notamment la trajectoire du faisceau d'éclairage incident (104 ; 104b ; 104c), passe au moins par segments essentiellement coaxialement ou essentiellement parallèlement à l'instrument optique (102 ; 102b ; 102c).

21. Dispositif optique servant à observer des objets selon l'une quelconque des revendications précédentes, se référant en tous cas directement ou indirectement à la revendication 5 ou 13, **caractérisé en ce que** la trajectoire du faisceau d'excitation passe au moins par segments essentiellement coaxialement ou essentiellement parallèlement à l'instrument optique (102 ; 102b ; 102c).

22. Dispositif optique servant à observer des objets selon l'une quelconque des revendications précédentes, se référant en tous cas directement ou indirectement à la revendication 5 ou 13, **caractérisé en ce qu'**à partir de la trajectoire du faisceau d'éclairage (104 ; 104a ; 104b ; 104c) et de la trajectoire du faisceau d'excitation, au moins l'une de ces trajectoires est infléchie et présente un premier segment de préférence essentiellement coaxialement ou parallèlement à l'instrument optique (102 ; 102b ; 102c) et un deuxième segment passant sous un angle, relié au premier segment au moyen d'un élément de déviation optique (129 ; 150a ; 129b ; 129c).

23. Dispositif optique servant à observer des objets selon la revendication 22, **caractérisé en ce qu'**une seule trajectoire du faisceau est infléchie et que l'autre trajectoire est essentiellement rectiligne.

24. Dispositif optique servant à observer des objets selon la revendication 22 ou 23, **caractérisé en ce** la trajectoire du faisceau d'excitation est infléchie.

25. Dispositif optique servant à observer des objets selon l'une quelconque des revendications 22 à 24, **caractérisé en ce** la trajectoire du faisceau d'éclairage (104a) est infléchie.

26. Dispositif optique servant à observer des objets selon l'une quelconque des revendications précédentes, se référant en tous cas directement ou indirectement à la revendication 5 ou 13, **caractérisé en ce que** la trajectoire du faisceau de sortie (120') passe au moins par segments essentiellement coaxialement ou essentiellement parallèlement à l'instrument optique (102 ; 102b ; 102c).

27. Dispositif optique servant à observer des en tous cas directement ou indirectement à la revendication 2 et se référant en tous cas directement ou indirectement à la revendication 5 ou 13, **caractérisé en ce que** la trajectoire du faisceau de sortie est infléchie et présente un premier segment de préférence essentiellement coaxialement à l'instrument optique (102 ; 102b ; 102c) et un deuxième segment passant sous un angle, relié au premier segment au moyen d'un élément de déviation optique (138).

28. Dispositif optique servant à observer des objets selon l'une quelconque des revendications précédentes, **caractérisé en ce qu'**au moins une source lumineuse d'excitation notamment au moins une source de lumière laser (122) émettant une lumière d'excitation essentiellement cohérente et/ou essentiellement parallèle, est associée dans la trajectoire du faisceau d'excitation et que la trajectoire du faisceau d'excitation est réalisée de telle manière que la lumière d'excitation est réglée avant d'atteindre le support de l'objet dans au moins un plan intermédiaire (AS, AS').

29. Dispositif optique servant à observer des objets selon la revendication 28, en tous cas se référant directement ou indirectement à la revendication 5 ou 13, **caractérisé en ce que** la lumière d'excitation est réglée dans un plan focal ou un plan pupillaire (AS) de l'instrument optique.

30. Dispositif optique servant à observer des objets selon la revendication 29, **caractérisé en ce que** la lumière d'excitation est mise au point dans le plan pupillaire (AS) de l'instrument optique, de préférence par une mise au point antérieure de la lumière d'excitation, dans au moins un plan pupillaire (AS') conjugué au plan pupillaire de l'instrument optique.

31. Dispositif optique servant à observer des objets selon l'une quelconque des revendications précédentes, **caractérisé en ce que** la zone de l'objet peut être éclairée par le biais d'au moins une trajectoire du faisceau d'éclairage (104 ; 104b ; 104c), notamment une trajectoire du faisceau d'éclairage incident (104 ; 104b ; 104c), avec lumière d'éclairage provenant d'une source lumineuse ajoutée ou d'une sortie de lumière ajoutée (106 ; 106b ; 106c), qui sert à l'excitation fluorescente par le biais d'une zone de profondeur de la zone de l'objet nettement plus grande que le domaine d'action de profondeur des champs électromagnétiques évanescents.

32. Dispositif optique servant à observer des objets selon l'une quelconque des revendications précédentes, **caractérisé en ce que** la zone de l'objet peut être éclairée par le biais d'au moins une trajectoire du faisceau d'éclairage (104 ; 104b ; 104c), notamment une trajectoire du faisceau d'éclairage incident (104 ; 104b ; 104c), avec lumière d'éclairage provenant d'une source lumineuse associée ou d'une sortie de lumière associée (106 ; 106b ; 106c), pour reproduire une image de lumière d'éclairage dans la zone de l'image ou dans la zone d'observation par le biais de la trajectoire du faisceau d'observation.

33. Dispositif optique servant à observer des objets selon l'une quelconque des revendications précédentes, se référant en tous cas directement ou indirectement à la revendication 2 ainsi que se référant en tous cas directement ou indirectement à la revendication 5 ou .13, **caractérisé en ce que** la trajectoire du faisceau d'excitation et/ou la trajectoire du faisceau de sortie traverse au moins une lentille ou un dispositif de lentille, notamment au moins une lentille ou un dispositif de lentille au sens d'une lentille tubulaire de/d'une trajectoire du faisceau d'éclairage, notamment une trajectoire du faisceau d'éclairage incident.

34. Dispositif optique servant à observer des objets selon l'une quelconque des revendications précédentes 1 à 32, se référant en tous cas directement ou indirectement à la revendication 2, **caractérisé en ce que** la / une trajectoire du faisceau d'éclairage, notamment une trajectoire de faisceau d'éclairage incident, comporte au moins une lentille (108) ou un dispositif de lentille au sens d'une lentille tubulaire et que ni la trajectoire du faisceau d'excitation, ni la trajectoire du faisceau de sortie, ne traverse cette lentille ou ce dispositif de lentille.

35. Dispositif optique servant à observer des objets selon l'une quelconque des revendications précédentes, se référant en tous cas directement ou indirectement à la revendication 8, **caractérisé en ce qu'**un axe optique (B) du dispositif de lentille passant de manière centrale par rapport au dispositif de lentille (160c, 108c) est décalé latéralement par rapport à un axe optique (A) de l'instrument optique passant centralement par rapport à l'instrument optique, les deux axes optiques étant de préférence essentiellement parallèles l'un à l'autre.

36. Dispositif optique servant à observer des objets selon la revendication 35, **caractérisé en ce que** le décalage latéral (a) des deux axes (A, B) est inférieur ou égal à la moitié du diamètre d'une pupille d'entrée (AS) de l'instrument optique (1 02c), de préférence à peu près égal à la moitié du diamètre de la pupille d'entrée.

37. Dispositif optique servant à observer des objets selon l'une quelconque des revendications précédentes, se référant en tous cas directement ou indirectement à la revendication 7, **caractérisé en ce que** le dispositif de lentille (102c) comprend une première lentille (108c) plus près de l'instrument optique (102c) ou un premier dispositif partiel de lentille, notamment au sens d'une lentille tubulaire, ainsi qu'une deuxième lentille (160c) éloignée de l'instrument optique ou un deuxième dispositif partiel de lentille.

38. Dispositif optique servant à observer des objets selon l'une quelconque des revendications précédentes, se référant en tous cas directement ou indirectement à la revendication 7, **caractérisé en ce que** la lumière d'éclairage du dispositif de lentille (160c, 108c) peut être introduite par le biais d'une autre lentille (162c) ou d'un autre dispositif de lentille, la lumière d'éclairage entrant de préférence à travers l'autre lentille ou l'autre dispositif de lentille.

39. Dispositif optique servant à observer des objets selon la revendication 38, **caractérisé en ce qu'**un axe optique (C) passant de manière centrale par rapport à une autre lentille (162c) ou un autre dispositif de lentille, est décalé latéralement par rapport à l'axe optique (B) du dispositif de lentille (160c, 108c) d'une première valeur de décalage et par rapport à l'axe optique (A) de l'instrument optique (102c) d'une deuxième valeur de décalage supérieure à la première valeur de décalage et est de préférence au moins parallèle à l'un de ces axes optiques.

40. Dispositif optique servant à observer des objets selon l'une quelconque des revendications précédentes, **caractérisé en ce que** les trajectoires du faisceau d'excitation sont réalisées au total comme des trajectoires de faisceaux à rayonnement libre non liées à un milieu conducteur de lumière.

41. Dispositif optique servant à observer des objets selon l'une quelconque des revendications précédentes, **caractérisé en ce que** les segments de trajectoires de faisceaux à rayonnement libre de plusieurs trajectoires de faisceaux d'excitation sont séparés les uns des autres par une sortie lumineuse respective ou une source lumineuse respective (122e-1, 122e-2 ; 122f-1, 122f-2), puis passent dans un segment de trajectoire du faisceau à rayonnement libre commun conduisant en direction de la zone de l'objet.

42. Dispositif optique servant à observer des objets selon la revendication 41, **caractérisé en ce que** le segment commun de trajectoire du faisceau à rayonnement libre, qui passe le cas échéant à travers l'instrument optique émettant à partir de la zone de l'objet, traverse la zone de l'objet ou se termine dans celle-ci.

43. Dispositif optique servant à observer des objets selon la revendication 41 ou 42, **caractérisé en ce qu'**on prévoit au moins un élément de regroupement (172e ; 172f) réunissant les segments de trajectoire du faisceau à rayonnement libre en un segment commun de trajectoire du faisceau à rayonnement libre.

44. Dispositif optique servant à observer des objets selon la revendication 43, **caractérisé en ce que** l'élément de regroupement (172e ; 172f) présente des propriétés de déviation en ce qui concerne au moins un des segments de trajectoire du faisceau à rayonnement libre et/ou des propriétés de sélection de longueurs d'ondes en ce qui concerne la lumière d'excitation introduite au moins par le biais de l'un des segments de trajectoire du faisceau à rayonnement libre.

45. Dispositif optique servant à observer des objets selon l'une quelconque des revendications précédentes, **caractérisé en ce que** les segments de trajectoire du faisceau à rayonnement libre de plusieurs longueurs de faisceau d'excitation passent séparément à partir d'une sortie lumineuse associée ou d'une source lumineuse associée (122d-1, 122d-2) et se dirigent vers la zone de l'objet sans être regroupés.

46. Dispositif optique servant à observer des objets selon la revendication 45, **caractérisé en ce que** les segments de trajectoire du faisceau à rayonnement libre passant séparément, qui traversent le cas échéant l'instrument optique émettant à partir de la zone de l'objet, traversent respectivement la zone de l'objet ou se terminent dans celle-ci.

47. Dispositif optique servant à observer des objets selon la revendication 45 ou 46, **caractérisé en ce que** les longueurs de faisceaux d'excitation sont séparées les unes des autres.

48. Dispositif optique servant à observer des objets selon la revendication 45, 46 ou 47, **caractérisé en ce que** les segments de trajectoire du faisceau à rayonnement libre présentent respectivement un segment s'étendant le long d'un axe d'entrée, de préférence parallèlement à l'axe d'entrée, et **en ce que** ces segments s'étendant le long ou parallèlement à l'axe d'entrée sont décalés autour de l'axe de manière angulaire l'un par rapport à l'autre (figure 7).

49. Dispositif optique servant à observer des objets selon la revendication 48, **caractérisé en ce que** les segments s'étendant le long ou parallèlement à l'axe d'entrée coupent un anneau (170d) virtuel concentrique par rapport à l'axe d'entrée.

50. Dispositif optique servant à observer des objets selon la revendication 48 ou 49, se référant directement ou indirectement à la revendication 4, 7, 5 ou 15, **caractérisé en ce qu'**un ou que l'axe optique (A) de l'instrument optique centré par rapport à l'instrument optique (102 ; 102b ; 102c) forme l'axe d'entrée.

51. Dispositif optique servant à observer des objets selon l'une quelconque des revendications précédentes, **caractérisé en ce que** des sources lumineuses, notamment des sources de lumière laser de différentes longueurs d'ondes d'excitation, sont associées aux trajectoires des faisceaux d'excitation, sources qui sont raccordées via un conducteur optique respectif, notamment une fibre optique ou un faisceau de fibres optiques, à chaque trajectoire du faisceau d'excitation ou à chaque segment de trajectoire du faisceau à rayonnement libre.

52. Dispositif optique servant à observer des objets selon l'une quelconque des revendications précédentes, **caractérisé en ce que** des sources lumineuses, notamment des sources de lumière laser de différentes longueurs d'ondes d'excitation, sont associées aux trajectoires de faisceaux d'excitation, d'où sort la trajectoire du faisceau d'excitation ou le segment de trajectoire du faisceau d'excitation à rayonnement libre respectif ou qui sont raccordées via un conducteur optique respectif, notamment une fibre optique ou un faisceau de fibres optiques, à chaque trajectoire du faisceau d'excitation ou à chaque segment de trajectoire du faisceau à rayonnement libre.

53. Dispositif optique servant à observer des objets selon la revendication 51 ou 52, **caractérisé en ce que** les conducteurs optiques pour la ou les longueurs d'ondes d'excitation respectives sont réalisés comme des fibres unimodales.

54. Dispositif optique servant à observer des objets selon la revendication 51, 52 ou 53, **caractérisé en ce que** les conducteurs optiques sont adaptés à la ou aux longueurs d'ondes d'excitation à guider chaque fois en vue d'une minimisation des pertes d'intensité.

55. Dispositif optique servant à observer des objets selon l'une quelconque des revendications précédentes, **caractérisé en ce qu'**au moins quelques unes des trajectoires du faisceau d'excitation sont ajustables indépendamment les unes des autres en ce qui concerne un réglage de l'angle d'incidence de la lumière d'excitation respective.

56. Dispositif optique servant à observer des objets selon l'une quelconque des revendications précédentes, **caractérisé par** un microscope (100) comportant au moins la zone de l'objet, la trajectoire du faisceau d'observation et, le cas échéant, au moins une trajectoire du faisceau d'éclairage.

57. Dispositif optique servant à observer des objets selon la revendication 56, **caractérisé en ce que** le microscope est réalisé comme un microscope droit ou, de préférence, un microscope inverse (100).

58. Dispositif optique servant à observer des objets selon la revendication 56 ou 57, **caractérisé en ce que** le microscope est réalisé comme un microscope de reproduction (100) reproduisant optiquement une image dans la zone d'image ou dans la zone d'observation par le biais d'une trajectoire du faisceau d'observation.

59. Dispositif optique servant à observer des objets selon l'une quelconque des revendications précédentes, **caractérisé en ce qu'**il comprend un appareil de mesure de fluorescence (100) comportant au moins la zone de l'objet, la trajectoire du faisceau d'observation et la trajectoire du faisceau d'excitation, le cas échéant, comprenant le microscope (100).
